# EUROPÄISCHE PATENTSCHRIFT

(11) **EP 3 385 624 B1**
(45) Veröffentlichungstag und Bekanntmachung des Hinweises auf die Patenterteilung: **30.09.2020**
(21) Anmeldenummer: 17178350.9
(22) Anmeldetag: 28.06.2017
(51) Int. Cl.: F24D 3/08, F24D 19/10

(54) **VERFAHREN ZUM BETREIBEN EINER HEIZ - UND BRAUCHWASSERANLAGE, UND HEIZ- UND BRAUCHWASSERANLAGE**
METHOD FOR OPERATING A HEATING - AND DOMESTIC WATER SYSTEM, AND HEATING AND DOMESTIC WATER SYSTEM
PROCÉDÉ DE FONCTIONNEMENT D'UNE INSTALLATION DE PRÉPARATION D'EAU SANITAIRE OU DE CHAUFFAGE, ET INSTALLATION DE PRÉPARATION D'EAU SANITAIRE

(30) Priorität: 07.04.2017 EP 17165568
(43) Veröffentlichungstag der Anmeldung: 10.10.2018
(73) Patentinhaber: MHG Heiztechnik GmbH, 21244 Buchholz in der Nordheide (DE)
(72) Erfinder: BONATO, Julian, 21244 Buchholz (DE); BETTERMANN, Mark, 21244 Buchholz (DE); KRÜGER, Ralf, 21244 Buchholz (DE)
(74) Vertreter: RGTH

(56) Entgegenhaltungen:
- EP-A1- 2 592 358
- EP-A1- 2 706 301
- GB-A- 2 448 896
- GB-A- 2 514 128

## Beschreibung

### TECHNISCHES GEBIET

Die vorliegende Erfindung betrifft ein Verfahren zum Betreiben einer Heiz- und Brauchwasseranlage, sowie eine solche Heiz- und Brauchwasseranlage selbst.

### HINTERGRUND DER ERFINDUNG

Eine Heiz- und Brauchwasseranlage ist beispielsweise aus der DE 103 04 679 A1 bekannt. Die dort gezeigte Heiz- und Brauchwasseranlage besteht aus einem Warmwasserspeichermodul und einem Heizungsmodul, wobei das Warmwasserspeichermodul einen Warmwasserspeicher aufweist. Das Heizungsmodul umfasst einen Heizwasserwärmetauscher, der zum Beispiel gas-, öl- oder auch solarbetrieben sein kann. Der Heizwasserwärmetauscher ist über Leitungen mit einem Plattenwärmetauscher verbunden, wobei Letzterer ebenfalls über Leitungen mit dem Warmwasserspeicher verbunden ist. In dem Plattenwärmetauscher wird thermische Energie von den Leitungen des Heizmoduls an die Leitungen des Warmwasserspeichermoduls übertragen und dadurch das Wasser im Warmwasserspeicher erwärmt.

Ferner ist aus der DE 197 31 794 A1 eine Speicherheizvorrichtung bekannt, bei der mittels eines Brenners ein Primär-Heizkreislauf beheizt wird. Weiterhin ist ein Brauchwasserspeicher zur Vorhaltung von Brauchwasser in einem Brauchwasser-Leitungssystem vorgesehen. Ferner umfasst die Speicherheizvorrichtung einen Warmwasser-Wärmetauscher, der thermische Energie von dem Primär-Heizkreislauf an das Brauchwasser-Leitungssystem auskoppelt.

Aus der EP 2 706 301 B1 ist eine Heizanlage mit einem Wasserspeicher, einem Solarkollektor und einer Verbrennungsvorrichtung bekannt. Eine Raumheizungseinrichtung ist über einen Wärmetauscher an den Wasserspeicher gekoppelt, um es dem Brauchwasser zu ermöglichen, eine Trägerflüssigkeit zur Raumheizung zu beheizen. Die Heizanlage umfasst eine Steuerung, die betrieben werden kann, um zu ermessen, ob das Brauchwasser zum Beheizen der Trägerflüssigkeit freigegeben wird. Ein

Verfahren mit den Merkmalen des Oberbegriffs des Anspruchs 1 und eine Heiz- und Brauchwasseranlage mit den Merkmalen des Oberbegriffs des Anspruchs 14 ist aus diesem Dokument bekannt.

Heutzutage sind Stromerzeugungsvorrichtungen, wie beispielsweise Photovoltaikanlagen oder auch kleinere Windkraftanlagen, in privaten Haushalten oder auch bei öffentlichen oder gewerblichen Gebäuden relativ weit verbreitet. Diese Anlagen erzeugen Strom, der in dem jeweiligen Gebäude vom entsprechenden Abnehmer abgenommen und vor Ort genutzt wird. Erzeugter Strom, für den zu einem jeweiligen Zeitpunkt kein lokaler Abnehmer vorhanden ist ("überschüssiger Strom"), kann in das Stromnetz eingespeist werden und wird an den Betreiber der Stromerzeugungsvorrichtung vergütet. Insbesondere in den Übergangsperioden im Frühling und im Herbst kann eine solche Situation verstärkt auftreten. Die Vergütung für den eingespeisten Strom wurde in der Vergangenheit häufig staatlich hoch gefördert. Die Förderprogramme werden derzeit stark zurückgefahren und viele aktuelle Förderverträge laufen demnächst aus, sodass immer häufiger nur eine äußerst geringe Vergütung für den eingespeisten Strom anfallen wird, sodass das Einspeisen des Stroms immer unattraktiver für den Betreiber einer Stromerzeugungsvorrichtung wird.

### DARSTELLUNG DER ERFINDUNG: AUFGABE, LÖSUNG, VORTEILE

Der vorliegenden Erfindung liegt die Aufgabe zugrunde, eine Heiz- und Brauchwasseranlage derart zu betreiben beziehungsweise derart auszubilden, dass von einer Stromerzeugungsvorrichtung, insbesondere einer Photovoltaikanlage oder einer, insbesondere kleineren, Windkraftanlage, beispielsweise mit einer Leistung bis zu 5 kW, erzeugter Strom von der Heiz- und Brauchwasseranlage in kosteneffizienter und energetisch effizienter Weise eingesetzt werden kann.

Erfindungsgemäß ist hierfür ein Verfahren zum Betreiben einer Heiz- und Brauchwasseranlage vorgesehen, wobei die Heiz- und Brauchwasseranlage eine Stromerzeugungseinrichtung, einen Warmwasserspeicher für Brauchwasser, einen Brauchwasserkreis, einen Heizwasserkreis, eine erste Wärmequelle zur Erwärmung des Brauchwassers, und eine zweite Wärmequelle zur Erwärmung des Brauchwassers umfasst, wobei die erste Wärmequelle und die zweite Wärmequelle im Warmwasserspeicher oder an anderer Stelle im Brauchwasserkreis angeordnet sind. Ferner sind der Brauchwasserkreis und der Heizwasserkreis thermisch gekoppelt. Das erfindungsgemäße Verfahren zum Betreiben einer Heiz- und Brauchwasseranlage sieht zumindest die folgenden Schritte vor:
a) Feststellen, ob eine Wärmespeicherkapazität des Warmwasserspeichers vorliegt;
b) Feststellen, ob von der Stromerzeugungsvorrichtung erzeugter Strom zur Verfügung steht, wobei die Stromerzeugungsvorrichtung mit der ersten Wärmequelle und/oder der zweiten Wärmequelle gekoppelt ist;
c) Wenn festgestellt wurde, dass eine Wärmespeicherkapazität vorliegt und von der Stromerzeugungsvorrichtung erzeugter Strom zur Verfügung steht, Speisen der ersten Wärmequelle und/oder der zweiten Wärmequelle mit dem Strom der Stromerzeugungsvorrichtung und Erwärmen des Brauchwassers, insbesondere im Warmwasserspeicher, mittels der mit dem Strom der Stromerzeugungsvorrichtung gespeisten ersten Wärmequelle und/oder mittels der mit dem Strom der Stromerzeugungsvorrichtung gespeisten zweiten Wärmequelle; und
d) Übertragen von thermischer Energie des Brauchwassers des Brauchwasserkreises an Heizwasser des Heizwasserkreises, wenn ein Heizbedarf vorliegt.

In den Schritten a) und b) wird zunächst festgestellt, ob zu einem gegebenen Zeitpunkt eine Wärmespeicherkapazität des Warmwasserspeichers besteht und ob von einer Stromerzeugungsvorrichtung erzeugter Strom zur Verfügung steht. Die Schritte können zeitlich in beliebiger Reihenfolge, jedoch bevorzugt unmittelbar nacheinander, oder auch gleichzeitig durchgeführt werden. Besonders bevorzugt wird Schritt b) vor Schritt a) durchgeführt. Sind beide Bedingungen erfüllt, das heißt, es besteht eine Wärmespeicherkapazität und es steht Strom zur Verfügung, der bevorzugt anderweitig nicht benötigt wird und ansonsten ins Netz eingespeist werden müsste, wird der zur Verfügung stehende Strom dazu verwendet, die erste Wärmequelle und/oder die zweite Wärmequelle zu betreiben. Die erste und/oder die zweite Wärmequelle erwärmen das Brauchwasser im Warmwasserspeicher und reichern dieses daher mit, insbesondere zusätzlicher, thermischer Energie an. Diese thermische Energie wird in einem weiteren Schritt über die thermische Kopplung des Brauchwasserkreises und des Heizwasserkreises vom Brauchwasserkreis an den Heizwasserkreis übertragen, wenn ein Heizbedarf vorliegt, sodass das Heizwasser im Heizwasserkreis erwärmt wird. Hierdurch kann beispielsweise ein Heizbedarf teilweise oder vollständig gedeckt werden.

Entsprechend kann durch das Verfahren in vorteilhafter Weise der durch die Stromerzeugungsvorrichtung erzeugte, zur Verfügung stehende Strom in kostentechnisch und energetisch effizienter Weise verwendet werden. Insbesondere wird durch den Strom über die erste und/oder zweite Wärmequelle eine Wärmeleistung zur Verfügung gestellt, die vom Brauchwasserkreis an den Heizwasserkreis ausgekoppelt wird. Durch eine solche, dem Heizwasserkreis, zumindest zeitweise, zur Verfügung gestellte zusätzliche Wärmeleistung, kann gleichzeitig die Leistung derjenigen primären Wärmequelle, die die Grundversorgung des Heizwasserkreises mit thermischer Energie im regulären Betrieb sicherstellt, zurückgefahren oder die primäre Wärmequelle gar ganz abgeschaltet werden. Hierdurch können Kosten eingespart werden. Darüber hinaus ergeben sich auch energetische und umwelttechnische Vorteile, da Stromerzeugungsvorrichtungen, wie Photovoltaikanlagen oder Windkraftanlagen in der Regel den erneuerbaren Energien zuzuordnen sind und die primäre Wärmequelle des Heizkreises häufig fossile Brennstoffe, wie Öl oder Gas, verwendet. Entsprechend ist die Stromerzeugungsvorrichtung bevorzugt eine Photovoltaikanlage oder eine Windkraftanlage.

Die thermische Auskopplung der Wärmeenergie erfolgt in Schritt d) des Verfahrens vom Brauchwasserkreis an den Heizwasserkreis, das heißt die Wärmeenergie des Brauchwassers wird an das Heizwasser übertragen. Das Heizwasser ist das sich im Heizwasserkreis (auch "Heizkreis" genannt) befindliche Warmwasser der Heizungsanlage.

Eine Wärmespeicherkapazität des Warmwasserspeichers besteht immer dann, wenn der Warmwasserspeicher noch zusätzliche thermische Energie speichern kann. Dies ist insbesondere dann der Fall, wenn die jeweilige Ist-Temperatur des Warmwasserspeichers unterhalb einer vorgegebenen Maximaltemperatur liegt. Entsprechend wird bei Schritt a) bevorzugt die Temperatur des Wassers im Warmwasserspeicher gemessen und die gemessene Temperatur mit einer vorgegebenen maximalen Temperatur verglichen.

Der Brauchwasserkreis umfasst das Brauchwasserleitungssystem, insbesondere einen Kaltwasserstrang, der zum Warmwasserspeicher geführt ist und einen Warmwasserstrang, der vom Warmwasserspeicher wegführt. Ebenfalls sind sowohl der Kaltwasserstrang als auch der Warmwasserstrang zweckmäßigerweise mit einer Wärmequelle, insbesondere der ersten Wärmequelle, verbunden, da dort das kalte Brauchwasser erwärmt wird und dem Warmwasserstrang zugeführt wird. In dem Warmwasserspeicher erfolgt in bekannter Weise eine Zwischenspeicherung des erwärmten Wassers, sodass das Wasser im Warmwasserspeicher für den vorliegenden Zusammenhang auch als zum Brauchwasserkreis gehörend betrachtet wird. Insbesondere in Privat- oder Bürogebäuden entspricht das Brauchwasser in der Regel dem Trinkwasser, sodass der Brauchwasserkreis auch als Trinkwasserkreis bezeichnet werden kann.

Gemäß dem erfindungsgemäßen Verfahren sind bei der Heiz- und Brauchwasseranlage immer mindestens zwei Wärmequellen, bevorzugt genau zwei Wärmequellen, zur Erwärmung des Brauchwassers vorgesehen. Bevorzugt ist die erste Wärmequelle die Primär-Wärmequelle für den Brauchwasserkreis, die den Wärmebedarf des Brauchwasserkreises im regulären Betrieb, insbesondere im Zapfbetrieb, abdeckt. Weiter bevorzugt ist die zweite Wärmequelle eine Sekundär-Wärmequelle, die nur zeitweise, insbesondere im Rahmen des erfindungsgemäßen Verfahrens, zur Erwärmung des Brauchwasserkreises geschaltet wird. Insbesondere kann die zweite Wärmequelle ausschließlich im Rahmen des erfindungsgemäßen Verfahrens verwendet werden. Zumindest eine der ersten Wärmequelle und der zweiten Wärmequelle, bevorzugt beide, verwendet Strom, um Wärme zu erzeugen. Hierbei kann der Strom direkt oder auch über eine Zwischenstufe in Wärmeenergie umgesetzt werden. Die erste und die zweite Wärmequelle sind im Warmwasserspeicher oder an anderer Stelle im Brauchwasserkreis angeordnet. In jedem Fall muss gewährleistet sein, dass eine thermische Kopplung zwischen der ersten und/oder der zweiten Wärmequelle und dem Brauchwasserkreis erfolgen kann. Bevorzugt ist zumindest die zweite Wärmequelle im beziehungsweise am Warmwasserspeicher angeordnet, das heißt, die zweite Wärmequelle kann das im Warmwasserspeicher vorhandene Wasser direkt erwärmen.

In Schritt b) wird festgestellt, ob von der Stromerzeugungsvorrichtung erzeugter Strom zur Verfügung steht. Der Strom kann dabei zur Verfügung stehen, wenn die Stromerzeugungsvorrichtung mit der ersten und/oder zweiten Wärmequelle gekoppelt ist und in dem jeweils angefragten Moment Strom erzeugt. In einem solchen Fall kann die Stromerzeugungsvorrichtung beispielsweise bevorzugt eine Photovoltaikanlage oder Windkraftanlage, die insbesondere lokal im Bereich der Heiz- und Brauchwasseranlage vorhanden ist und bevorzugt mit der ersten und/oder zweiten Wärmequelle gekoppelt ist. Der Strom kann ferner zur Verfügung stehen, wenn dieser von der Stromerzeugungsvorrichtung zu einem davorliegenden Zeitpunkt erzeugt, jedoch zwischengespeichert wurde, beispielsweise in einem Stromspeicher, wie Batterie oder Akkumulator. Solcher in einem Stromspeicher zwischengespeicherter Strom kann dann ebenfalls im Sinne von Schritt b) zur Verfügung stehen und von der ersten und/oder der zweiten Wärmequelle verwendet werden. In einem solchen Fall ist die erste und/oder zweite Wärmequelle bevorzugt mit dem Stromspeicher gekoppelt und kann ferner zusätzlich auch mit der Stromerzeugungsvorrichtung gekoppelt sein. Des Weiteren kann zwischen der Stromerzeugungsvorrichtung und der ersten und/oder der zweiten Wärmequelle ein intelligenter Stromzähler zwischengeschaltet sein, der anhand eines Vergleichs von vorgegebenen Werten mit Ist-Werten feststellt, ob von der Stromerzeugungsvorrichtung erzeugter Strom zur Verfügung steht. Beispielsweise kann diese Feststellung anhand der aktuellen Strompreise getroffen werden. Auch bei dieser Ausführung kann die erste und/oder zweite Wärmequelle mit der Stromerzeugungsvorrichtung gekoppelt sein. Dies muss aber nicht zwingend der Fall sein. Ferner kann die Stromerzeugungsvorrichtung über ein intelligentes Stromnetz mit der ersten und/oder zweiten Wärmequelle verbunden sein. In diesem Fall sind die erste und/oder zweite Wärmequelle bevorzugt nicht mit der Stromerzeugungsvorrichtung gekoppelt. Auch hier kann die Feststellung, ob von der Stromerzeugungsvorrichtung erzeugter Strom zur Verfügung steht, anhand eines Vergleichs von vorgegebenen Werten mit Ist-Werten erfolgen. Dies wird bevorzugt von der Steuerungsvorrichtung des intelligenten Stromnetzes festgestellt. Insbesondere wenn die Stromerzeugungsvorrichtung im Bereich der ersten und/oder zweiten Wärmequelle angeordnet ist, beispielsweise im oder am selben Gebäude, kann bevorzugt ebenfalls festgestellt werden, ob der vorhandene Strom gegebenenfalls von anderen Abnehmern, zum Beispiel innerhalb des Gebäudes, die eine höhere Priorisierung haben als die erste und/oder die zweite Wärmequelle, abgenommen wird beziehungsweise abgenommen werden soll. Hierdurch kann bevorzugt festgestellt werden, dass "überschüssiger Strom" zur Verfügung steht, der ansonsten zwischengespeichert und/oder ins Netz eingespeist werden müsste.

Unter dem Begriff "gekoppelt" in Schritt b) des erfindungsgemäßen Verfahrens ist vorliegend zu verstehen, dass die Stromerzeugungsvorrichtung und die erste und/oder die zweite Wärmequelle derart verbunden sind, dass der von der Stromerzeugungsvorrichtung erzeugte Strom beziehungsweise der zur Verfügung gestellte Strom an die erste und/oder die zweite Wärmequelle weitergeleitet und diese mit dem Strom teilweise oder vollständig betrieben werden können. Dies beinhaltet auch Ausführungsformen, bei denen der von der Stromerzeugungsvorrichtung erzeugte Strom zwischengespeichert wird, wobei dann die erste und/oder die zweite Wärmequelle zweckmäßigerweise mit dem Zwischenspeicher verbunden sind. Ferner sind die erste und/oder die zweite Wärmequelle im Falle einer Kopplung mit der Stromerzeugungsvorrichtung bevorzugt direkt - ohne den Umweg über ein Stromnetz bzw. Versorgungsnetz - mit der Stromerzeugungsvorrichtung verbunden.

Mit dem erfindungsgemäßen Verfahren wird die Heiz- und Brauchwasseranlage betrieben, wobei dies bevorzugt nur zeitweise erfolgt, nämlich dann, wenn von der Stromerzeugungsvorrichtung erzeugter Strom zur Verfügung steht und/oder von der ersten und/oder zweiten Wärmequelle abgenommen werden kann. Zusätzlich muss eine Wärmespeicherkapazität des Warmwasserspeichers vorliegen. Wenn diese Bedingungen nicht erfüllt sind, wird die Heiz- und Brauchwasseranlage zweckmäßigerweise mit einem anderen Verfahren für den regulären Betrieb betrieben.

Zusätzlich zur Feststellung der Wärmespeicherkapazität des Warmwasserspeichers wird vorteilhaft in einem weiteren Schritt festgestellt, ob ein Heizbedarf vorliegt. Dieser weitere Schritt kann zeitgleich oder zeitlich versetzt (vorher oder nachher) zum Schritt c) durchgeführt werden, jedoch vor dem Schritt d). Der Schritt d) wird dann in Abhängigkeit dieser Feststellung durchgeführt, d.h. nur dann, wenn ein Heizbedarf vorliegt. Der festzustellende Heizbedarf ist insbesondere der Heizenergiebedarf und/oder der Raumheizbedarf eines Gebäudes, dem die Heiz- und Brauchwasseranlage zugeordnet ist. Insbesondere umfasst dies die benötigte Heizleistung, um Wärme im Gebäude an Heizeinrichtungen wie Heizkörper, Fußbodenheizung, Wandheizung und dergleichen zur Verfügung zu stellen. Insbesondere wird vorliegend unter dem Begriff Heizbedarf nicht die Wärmeleistung verstanden, die zur Erwärmung des Brauchwassers für den Zapfbetrieb benötigt wird. Der Heizbedarf kann anhand verschiedenster physikalischer beziehungsweise technischer Größen beziehungsweise Werte ermittelt werden und insbesondere durch den Vergleich von Soll- und Istwerten. Hierfür kann beispielsweise unter anderem eine Vorlauftemperatur des Heizkreises, eine Außentemperatur und/oder eine für die Heizanlage vorgegebene Heizkurve herangezogen werden. Entsprechend ist der Heizbedarf insbesondere der jeweils vorliegende Heizwärmebedarf beziehungsweise die benötigte Heizleistung zur Zurverfügungstellung von Heizwärme für die Räume eines Gebäudes.

Wenn die Schritte a) und b) durchgeführt worden sind und beide dort festgestellten Bedingungen vorliegen, wird die erste und/oder zweite Wärmequelle mittels des Stromes der Stromerzeugungsvorrichtung betrieben, um das Brauchwasser zu erwärmen. Erst im Anschluss daran, insbesondere mit zeitlichem Abstand, wird gemäß Schritt d) thermische Energie des Brauchwassers ans Heizwasser übertragen. Alternativ, insbesondere wenn das Wasser im Warmwasserspeicher beziehungsweise im Brauchwasserkreis bereits eine relativ hohe Temperatur aufweist, können die Schritte c) und d) gleichzeitig begonnen werden. Schritt d) wird jedoch bevorzugt zeitlich betrachtet nicht vor Schritt c) durchgeführt.

Bevorzugt ist der Warmwasserspeicher kein Kombispeicher und/oder kein Schichtenspeicher. Ferner ist bevorzugt, dass der Heizwasserkreis nicht direkt mit dem Warmwasserspeicher thermisch gekoppelt ist, insbesondere ist der Heizwasserkreis nicht durch den Warmwasserspeicher geführt.

Bevorzugt umfasst die Heiz- und Brauchwasseranlage keinen Heizwasserspeicher.

Ferner ist es bevorzugt, dass die die thermische Kopplung des Brauchwasserkreises und des Heizwasserwasserkreises nicht im Bereich des Heizungsrücklaufs des Heizwasserkreises erfolgt. Insbesondere erfolgt entsprechend keine Heizungsrücklauftemperaturanhebung.

Vorteilhafterweise wird die Temperatur des Brauchwassers im Warmwasserspeicher gemessen. Bevorzugt erfolgt die Messung in vorgegebenen, insbesondere kontinuierlichen Abständen. Besonders bevorzugt kann die Messung auch fortlaufend erfolgen. Hierbei ist es insbesondere zweckmäßig, die Temperatur in einem unteren Bereich des Warmwasserspeichers zu messen.

Bevorzugt kann die gemessene Temperatur im Warmwasserspeicher im Hinblick auf ein oder mehrerer der Schritte a) bis d) des erfindungsgemäßen Verfahrens verwendet werden. Insbesondere kann die gemessene Temperatur des Brauchwassers im Warmwasserspeicher mit einer ersten vorgegebenen Temperatur verglichen werden, wobei bei Überschreiten der ersten vorgegebenen Temperatur und bei Vorliegen eines Heizbedarfs die Übertragung von thermischer Energie vom Brauchwasser ans Heizwasser (Schritt d)) begonnen wird. Bevorzugt beträgt die erste vorgegebene Temperatur mindestens 85°C, ferner bevorzugt mindestens 75°C, besonders bevorzugt mindestens 65°C, ganz besonders bevorzugt mindestens 60°C, ferner ganz besonders bevorzugt mindestens 50°C. Auch kann die erste vorgegebene Temperatur genau 85°C, genau 75°C, genau 65°C, genau 60°C oder genau 50°C betragen. Auch kann die erste vorgegebene Temperatur der jeweils zu einem gegebenen Zeitpunkt gemessenen Heizungsvorlauftemperatur, gegebenenfalls zuzüglich eines vorgegebenen Zuschlags, entsprechen. Hierdurch wird sichergestellt, dass ausreichend thermische Energie im Brauchwasser des Warmwasserspeichers beziehungsweise im Brauchwasserkreis vorhanden ist, bevor die Übertragung der thermischen Energie vom Brauchwasser an das Heizwasser begonnen wird. Die Steigerung der Temperatur auf die beziehungsweise über die erste vorgegebene Temperatur erfolgt gemäß Schritt c) des Verfahrens über die erste und/oder die zweite Wärmequelle. Ferner kann auch eine Maximaltemperatur für das Brauchwasser im Warmwasserspeicher beziehungsweise im Brauchwasserkreis vorgegeben werden, über die hinaus das Brauchwasser nicht erwärmt wird. Beispielsweise kann diese Maximaltemperatur mindestens 80°C, bevorzugt mindestens 87°C, besonders bevorzugt mindestens 95°C betragen. Auch die Maximaltemperatur genau 80°C, genau 87°C oder genau 95°C betragen.

In einer weiteren bevorzugten Ausführungsform umfasst das Verfahren ferner einen oder mehrere der folgenden Schritte:
e) Beenden des Erwärmens des Brauchwassers wenn keine Wärmespeicherkapazität des Warmwasserspeichers vorliegt und/oder wenn kein oder kein ausreichender Strom von der Stromerzeugungsvorrichtung zur Speisung der ersten und/oder zweiten Wärmequelle zur Verfügung steht,
f) Beenden des Übertragens von thermischer Energie des Brauchwassers ans Heizwasser, wenn die Temperatur des Brauchwassers, insbesondere gemessen im Warmwasserspeicher, eine zweite vorgegebene Temperatur und/oder eine Heizungsvorlauftemperatur des Heizwasserkreises unterschreitet, wobei bevorzugt die zweite Temperatur maximal 70°C, ferner bevorzugt maximal 65°C, besonders bevorzugt maximal 60°C, ganz besonders bevorzugt maximal 50°C beträgt,
g) Zuschalten einer weiteren Wärmequelle zur Erwärmung des Heizwassers, wenn die thermische Energie gemäß Schritt d) übertragen wird und eine Heizungsvorlauftemperatur des Heizwasserkreises unterhalb einer dritten vorgegebenen Temperatur liegt.

Durch Schritt e) und/oder Schritt f) wird sichergestellt, dass das Verfahren bzw. einzelne Schritte des Verfahrens nur so lange durchgeführt werden, solange bestimmte vorgegebene Voraussetzungen vorliegen. Insofern kann das Beenden des Erwärmens des Brauchwassers (Schritt c)) gemäß Schritt e) beispielsweise erfolgen, wenn kein oder kein ausreichender Strom mehr von der Stromerzeugungsvorrichtung zur Speisung der ersten und/oder zweiten Wärmequelle zur Verfügung steht und/oder wenn keine Wärmespeicherkapazität des Warmwasserspeichers (mehr) vorliegt. Dies ist vorteilhaft, da das Durchführen des erfindungsgemäßen Verfahrens mit von der Stromerzeugungsvorrichtung, bevorzugt eine Photovoltaikanlage oder eine Windkraftanlage, erzeugtem Strom zweckmäßig durchzuführen ist. Wenn von der Stromerzeugungsvorrichtung kein ausreichender Strom zur Verfügung steht, wäre es zum Beispiel nicht zweckmäßig, die erste und/oder zweite Wärmequelle zur Durchführung des Verfahrens weiter mit regulär bezogenem Netzstrom zu betreiben. Ebenso ist es zweckmäßig die Erwärmung des Brauchwassers einzustellen, wenn die maximale Wärmespeicherkapazität des Warmwasserspeichers erreicht ist. Das Beenden des Erwärmens des Brauchwassers kann insbesondere durch Abschalten der ersten und/oder zweiten Wärmequelle beziehungsweise durch Regelung der Leistung der ersten und/oder zweiten Wärmequelle erfolgen.

Gemäß Schritt f) wird das Übertragen von thermischer Energie des Brauchwassers ans Heizwasser (Schritt d)) beendet, wenn die Temperatur des Brauchwassers, bevorzugt gemessen im Warmwasserspeicher, eine vorgegebene zweite Temperatur und/oder eine Heizungsvorlauftemperatur des Heizwasserkreises unterschreitet. Die vorgegebene zweite Temperatur kann auf Basis der Heizungsvorlauftemperatur bestimmt werden (z. B. Heizungsvorlauftemperatur zuzüglich eines vorgegebenen Zuschlags). Das Beenden des Übertragens der thermischen Energie kann insbesondere durch Ansteuerung bzw. Abschaltung einer Pumpe im Brauchwasserkreis erfolgen. Insbesondere ist die zweite Temperatur derart gewählt, dass bei der Unterschreitung keine ausreichende thermische Energiemenge mehr im Brauchwasser vorhanden ist, um den Heizbetrieb durchzuführen. Bevorzugt beträgt die zweite Temperatur maximal 70°C, ferner bevorzugt maximal 65°C, besonders bevorzugt maximal 60°C, ganz besonders bevorzugt maximal 50°C. Auch kann die Temperatur genau 70°C, genau 65°C, genau 60°C oder genau 50°C betragen. Fällt die Temperatur des Brauchwassers unterhalb der Temperatur des Heizungsvorlaufs ist die thermische Energie im Heizungskreis höher als im Brauchwasserkreis und die Durchführung des Schritts d) daher nicht mehr zweckmäßig.

Gemäß Schritt g) wird eine weitere Wärmequelle zur Erwärmung des Heizwassers zugeschaltet, wenn die thermische Energie gemäß Schritt d) übertragen wird und eine Heizungsvorlauftemperatur des Heizwasserkreises unterhalb einer dritten vorgegebenen Temperatur liegt. Hierdurch wird sichergestellt, dass in Situationen, in denen gemäß Schritt d) thermische Energie des Brauchwassers ans Heizwasser übertragen wird, die derart übertragene thermische Energie aber nicht ausreicht, um das Heizwasser auf eine vorgegebene Temperatur zu erwärmen, diese vorgegebene Temperatur trotzdem - durch Zuschaltung einer weiteren Wärmequelle - erreicht wird. Die weitere Wärmequelle kann eine dritte Wärmequelle sein. Die weitere Wärmequelle kann aber auch die erste oder zweite Wärmequelle sein, wobei die weitere Wärmequelle in diesem Fall nicht gemäß Schritt c) das Brauchwasser erwärmt. Insbesondere kann die weitere Wärmequelle mit fossilen Brennstoffen betrieben werden und bevorzugt ein Gasbrenner sein.

Weiterhin ist es bevorzugt, dass die Heiz- und Brauchwasseranlage für die thermische Kopplung des Brauchwasserkreises und des Heizwasserkreises einen Wärmetauscher umfasst. Bevorzugt erfolgt die Übertragung der thermischen Energie gemäß Schritt d) mittels dieses Wärmetauschers. Entsprechend verlaufen daher vorteilhafterweise ein Leitungsabschnitt sowohl des Brauchwasserkreises als auch des Heizwasserkreises durch den Wärmetauscher. Ferner ist der Wärmetauscher vorteilhaft außerhalb des Warmwasserspeichers angeordnet. Der Wärmetauscher und der Warmwasserspeicher können in einem gemeinsamen Gehäuse und/oder direkt nebeneinanderliegend angeordnet sein. Ebenso können der Wärmetauscher und der Warmwasserspeicher beabstandet zueinander und/oder in unterschiedlichen Gehäusen angeordnet sein. In dem Wärmetauscher erfolgt die verfahrensgemäße Übertragung der thermischen Energie entsprechend vom Brauchwasserkreis an den Heizwasserkreis. Bevorzugt erfolgt die thermische Kopplung zwischen Brauchwasserkreis und Heizwasserkreis ausschließlich im Wärmetauscher.

Ferner bevorzugt umfasst die Heiz- und Brauchwasseranlage eine Pumpe, die im Brauchwasserkreis angeordnet beziehungsweise als Teil des Brauchwasserkreises ausgebildet ist. Mittels der Pumpe wird das gemäß Schritt c) erwärmte Brauchwasser des Warmwasserspeichers zum Wärmetauscher gefördert. Dort gibt das Brauchwasser Wärme an das Heizwasser ab. Das so abgekühlte Brauchwasser wird dann von der Pumpe wieder zurück zum Warmwasserspeicher gefördert. Ebenso ist es zweckmäßig, dass das Heizwasser mittels einer weiteren Pumpe entlang des Heizkreises durch den Wärmetauscher gefördert wird, um die Wärme des Brauchwassers aufzunehmen und zu den Wärmeabnehmern im Gebäude zu befördern. Durch das Pumpen des Brauchwassers vom Warmwasserspeicher zum Wärmetauscher und wieder zurück zum Warmwasserspeicher entsteht daher ein Kreislauf, bei dem das im Wärmetauscher abgekühlte Brauchwasser wieder dem Speicher zugeführt und dort wieder erwärmt werden kann. Bevorzugt kann die Leistung der Pumpe an den jeweiligen Bedarf, insbesondere den Heizbedarf, angepasst beziehungsweise geregelt werden. Hierfür kann die Pumpe besonders bevorzugt als drehzahlgeregelte Pumpe ausgeführt sein, die in Abhängigkeit von vorgegebenen und/oder ermittelten technischen Größen eingeregelt wird. Ferner ist es bevorzugt, dass die Pumpe in einem Kaltwasserstrang des Brauchwasserkreises angeordnet ist.

Gemäß einer weiteren Ausführungsform des Verfahrens umfasst die erste Wärmequelle einen Brenner, insbesondere einen Gasbrenner, und die zweite Wärmequelle ein elektrisches Heizelement, insbesondere einen Elektroheizstab. Bevorzugt kann die erste Wärmequelle auch aus dem Brenner und/oder die zweite Wärmequelle aus dem elektrischen Heizelement bestehen. Weiterhin kann die Heiz- und Brauchwasseranlage bevorzugt keine weitere Wärmequelle umfassen. Ferner kann bei dieser Ausführungsform die erste Wärmequelle nicht mit der Stromerzeugungsvorrichtung gekoppelt sein, das heißt, der Brenner bezieht dann keinen Strom von der Stromerzeugungsvorrichtung, sondern bevorzugt aus dem regulären Stromnetz. Grundsätzlich wäre es aber auch möglich, den Brenner mit der Stromerzeugungsvorrichtung zu koppeln, so dass dieser ebenfalls mit dem von der Stromerzeugungsvorrichtung erzeugten Strom betrieben werden kann. Bei dieser Ausführungsform wird die Erwärmung gemäß Schritt c) ausschließlich über die zweite Wärmequelle durchgeführt. Das heißt, der zur Verfügung stehende und für das vorliegende Verfahren verwendete Strom wird gemäß der vorliegenden Ausführungsform nur dem elektrischen Heizelement zugeführt und von diesem in Wärme umgewandelt, die dann wiederum vom Brauchwasserkreis auf den Heizwasserkreis übertragen wird. Das elektrische Heizelement ist bevorzugt im oder am Warmwasserspeicher angeordnet und kann somit das Brauchwasser im Speicher direkt erwärmen. Ein elektrisches Heizelement kann grundsätzlich jede Vorrichtung sein, die mittels Strom Wärme erzeugt, bevorzugt wandelt das elektrische Heizelement die elektrische Energie in thermische Energie um. Grundsätzlich ist es möglich, dass zusätzlich oder alternativ zum Brenner die erste Wärmequelle eine andere Wärmequelle, wie zum Beispiel eine Pellets-Heizung, ein Mini BHKW oder dergleichen, umfasst.

Bei der vorbeschriebenen Ausführungsform des Verfahrens ist es ferner bevorzugt, dass die erste Wärmequelle, insbesondere der Brenner, zur Erwärmung sowohl des Brauchwassers als auch des Heizwassers, insbesondere während des regulären Betriebs der Heiz- und Brauchwasseranlage, ausgebildet ist, wobei die erste Wärmequelle und der Heizwasserkreis hierfür mittels eines Wärmetauschers thermisch gekoppelt sind. Bevorzugt ist ferner die erste Wärmequelle mit dem Brauchwasserkreis mittels desselben Wärmetauschers thermisch gekoppelt. Mit anderen Worten ist bei dieser bevorzugten Ausführungsform der Wärmetauscher derart ausgebildet, dass die erste Wärmequelle Wärme sowohl an den Heizwasserkreis als auch an den Brauchwasserkreis übertragen kann. Bevorzugt kann dies wahlweise erfolgen und/oder gleichzeitig. Zweckmäßigerweise verlaufen Leitungsabschnitte beider Kreise, das heißt sowohl des Heizwasserkreises als auch des Brauchwasserkreises, durch den Wärmetauscher. Zusätzlich kann der Brenner an den Wärmetauscher vorteilhaft derart angeschlossen sein, dass die beim Brennvorgang entstehende Wärme an den Heizwasserkreis beziehungsweise den Brauchwasserkreis übertragen werden kann. Ferner ist es bevorzugt, dass der Wärmetauscher derart ausgebildet ist, dass auch der Brauchwasserkreis und der Heizwasserkreis über den Wärmetauscher miteinander thermisch koppelbar sind. Insbesondere kann dann die Übertragung der thermischen Energie vom Brauchwasserkreis an den Heizwasserkreis gemäß Schritt d) des erfindungsgemäßen Verfahrens durchgeführt werden.

Bei der vorbeschriebenen Ausführungsform des Verfahrens, bei dem die erste Wärmequelle nicht mit der Stromerzeugungsvorrichtung gekoppelt ist, ist es ferner bevorzugt, dass wahlweise oder zwingend die erste Wärmequelle abgeschaltet wird oder die Leistung der ersten Wärmequelle reduziert wird, wenn gemäß Schritt d) des Verfahrens die thermische Energie übertragen wird. "Zwingend" bedeutet im vorliegenden Zusammenhang, dass in dieser Ausführungsform die erste Wärmequelle immer abgeschaltet wird, sobald Schritt d) durchgeführt wird. Bei der Variante "wahlweise" kann die erste Wärmequelle abgeschaltet beziehungsweise in ihrer Leistung reduziert werden oder auch nicht. Dies wird vorteilhafterweise in Abhängigkeit bestimmter Parameter geregelt. Insbesondere ist hierbei die ermittelte Heizungsvorlauftemperatur und/oder der festgestellte Heizbedarf zu betrachten. Liegt die Heizungsvorlauftemperatur beispielsweise unterhalb eines vorgegebenen Sollwertes, ist es zweckmäßig, die erste Wärmequelle weiter zu fahren, gegebenenfalls auf einem reduzierten Leistungsniveau. Andererseits ist es bevorzugt möglich, die erste Wärmequelle vollständig abzuschalten, da hierdurch der größte Einspareffekt im Hinblick auf die Energieeffizienz und auch auf die Kosteneffizienz erreicht werden kann.

Der Warmwasserspeicher weist zweckmäßigerweise einen Kaltwasseranschluss und einen Warmwasseranschluss auf. Im regulären Betrieb, insbesondere im regulären Zapfbetrieb, wird dem Warmwasserspeicher warmes Brauchwasser über den Warmwasseranschluss abgenommen beziehungsweise der Warmwasserspeicher gibt erwärmtes Brauchwasser über den Warmwasseranschluss an den Brauchwasserkreis ab. Über den Kaltwasseranschluss ist der Warmwasserspeicher ferner mit dem Kaltwasserstrang des Brauchwasserkreises verbunden. Bevorzugt fördert die Pumpe das gemäß Schritt c) des Verfahrens erwärmte Brauchwasser des Warmwasserspeichers über den Kaltwasseranschluss zum Wärmetauscher, wo das Brauchwasser Wärme an den Heizwasserkreis abgibt. Das abgekühlte Brauchwasser wird von der Pumpe vom Wärmetauscher über den Warmwasseranschluss wieder zurück zum Warmwasserspeicher gefördert. Mit anderen Worten wird gemäß der vorliegenden Ausführungsform dem Warmwasserspeicher das Wasser in quasi umgekehrter Richtung im Vergleich zum regulären Betrieb zugeführt. Im regulären Betrieb gibt der Speicher Wasser über den Warmwasseranschluss ab, während dem Speicher gemäß der vorliegenden Ausführungsform des erfindungsgemäßen Verfahrens Wasser über den Warmwasseranschluss zugeführt wird. Ein sich hieraus ergebender Vorteil besteht darin, dass diejenige Pumpe, die für den regulären Betrieb verwendet wird, auch für das vorliegende Verfahren verwendet werden kann. Die reguläre Pumpe kann insbesondere im Kaltwasserstrang beziehungsweise einer Kaltwasserleitung des Brauchwasserkreises angeordnet sein. Diese Pumpe fördert im regulären Betrieb kaltes Brauchwasser zum Wärmetauscher hin, damit dieses dort erwärmt werden kann. Da im Betrieb gemäß der vorliegenden Ausführungsform des erfindungsgemäßen Verfahrens das Wasser vom Warmwasserspeicher über den Kaltwasseranschluss zum Wärmetauscher geführt wird, ergibt sich dieselbe Förderrichtung für die Pumpe, sodass diese in beiden Fällen genutzt werden kann.

Gemäß einer anderen, insbesondere alternativen, Ausführungsform des Verfahrens umfasst die erste Wärmequelle eine Wärmepumpe und die zweite Wärmequelle ein elektrisches Heizelement, insbesondere einen Elektrostab. Auch kann die erste Wärmequelle aus der Wärmepumpe und/oder die zweite Wärmequelle aus dem elektrischen Heizelement bestehen. Weiterhin kann die Heiz- und Brauchwasseranlage bevorzugt keine weitere Wärmequelle umfassen. Bevorzugt sind bei dieser Ausführungsform sowohl die erste als auch die zweite Wärmequelle mit der Stromerzeugungsvorrichtung gekoppelt. Bevorzugt erwärmt die Wärmepumpe das Wasser im Warmwasserspeicher. Insbesondere ist die Wärmepumpe beziehungsweise ein Wärmetauscher und/oder Kondensator der Wärmepumpe im oder am Warmwasserspeicher angeordnet. Ferner ist bevorzugt das elektrische Heizelement im Warmwasserspeicher angeordnet. Die erste Wärmequelle ist ferner bevorzugt auch dafür ausgebildet, dem Warmwasserspeicher beziehungsweise dem Brauchwasserkreis im regulären Betrieb Wärme zuzuführen. Im Betrieb gemäß dem vorliegenden Verfahren kann nunmehr gemäß der vorliegenden Ausführungsform während der Ausführung des Schrittes c) dem Warmwasserspeicher beziehungsweise dem Brauchwasserkreis sowohl über die erste Wärmequelle als auch über die zweite Wärmequelle Wärme zugefügt werden, wobei die Wärme durch Strom von der Stromerzeugungsvorrichtung erzeugt wurde. Hierbei kann wahlweise die Erwärmung gemäß Schritt c) nur über die erste Wärmequelle, nur über die zweite Wärmequelle oder sowohl über die erste als auch über die zweite Wärmequelle erfolgen. Insbesondere wird dies von einer Steuer- und/oder Regelvorrichtung entsprechend eingeregelt. Auch kann während der Durchführung des Schrittes c) von der einen Wärmequelle zur anderen gewechselt werden. Insbesondere kann zu jedem gegebenen Zeitpunkt der Durchführung des Schrittes c) jede unterschiedliche Option für die Erwärmung vorliegen beziehungsweise durchgeführt werden. Die jeweils geeignete Option kann dabei bevorzugt aufgrund bestimmter vorgegebener Parameter und/oder ermittelter physikalischer oder technischer Werte der Heiz- und Brauchwasseranlage ausgewählt werden. Insbesondere kann die Auswahl auf Basis des benötigten Heizbedarfs, der Temperatur im Warmwasserspeicher und/oder der zur Verfügung stehenden Strommenge erfolgen. Bevorzugt wird die Wärmepumpe in einem Betriebsbereich von 10°C bis 65°C und das elektrische Heizelement in einem Betriebsbereich von 10°C bis 95°C betrieben. In einer besonders bevorzugten Variante wird das Brauchwasser im Warmwasserspeicher bei Beginn des Schritts c) zunächst ausschließlich von der Wärmepumpe erwärmt. Wenn die Temperatur des Brauchwassers, insbesondere gemessen im Warmwasserspeicher, den Maximalwert des Betriebsbereichs der Wärmepumpe erreicht, wird das elektrische Heizelement hinzugeschaltet.

Bei der vorstehend beschriebenen, bevorzugten Ausführungsform des Verfahrens, bei der die erste Wärmequelle eine Wärmepumpe umfasst, ist es ferner bevorzugt, dass die Pumpe das in Schritt c) erwärmte Brauchwasser über den Warmwasseranschluss zum Wärmetauscher fördert. Im Wärmetauscher gibt das Brauchwasser Wärme an den Heizwasserkreis ab und kühlt sich ab. Das abgekühlte Brauchwasser wird von der Pumpe vom Wärmetauscher weiter über den Kaltwasseranschluss zurück zum Warmwasserspeicher gefördert. Auch bei dieser Ausführungsform ist die Pumpe vorteilhaft im Kaltwasserstrang beziehungsweise einer Kaltwasserleitung des Brauchwasserkreises angeordnet. Bei dieser Ausführungsform ergibt sich dieselbe Förderrichtung in Bezug auf den Wasserspeicher im Vergleich zum regulären Betrieb, da sowohl im regulären Betrieb als auch gemäß der vorliegenden, bevorzugten Ausführungsform des Verfahrens das erwärmte Wasser über den Warmwasseranschluss des Warmwasserspeichers entnommen wird. Ferner ist es vorteilhaft bei dieser Ausführungsform ein Rückschlagventil im Brauchwasserkreis, insbesondere im Kaltwasserstrang des Brauchwasserkreises, vorzusehen, sodass sichergestellt wird, dass das Wasser vom Wärmetauscher auch tatsächlich wieder zurück zum Kaltwasseranschluss des Warmwasserspeichers gefördert wird.

Die vorliegende Erfindung umfasst ferner eine Heiz- und Brauchwasseranlage umfassend eine Stromerzeugungsvorrichtung, einen Warmwasserspeicher für Brauchwasser, einen Brauchwasserkreis, einen Heizwasserkreis, eine erste Wärmequelle zur Erwärmung des Brauchwassers, eine zweite Wärmequelle zur Erwärmung des Brauchwassers, wobei die zweite Wärmequelle im Warmwasserspeicher oder an anderer Stelle im Brauchwasserkreis angeordnet ist, und eine Steuer- und Regelvorrichtung, die zur Durchführung des vorbeschriebenen erfindungsgemäßen Verfahrens ausgebildet ist. Gegebenenfalls ist die Steuer- und Regelvorrichtung zum Empfang mindestens eines Wärmespeicherkapazitätseingangssignals und mindestens eines Stromeingangssignals, bevorzugt eines Stromerzeugungseingangssignals einer Photovoltaikanlage oder einer Windkraftanlage, eingerichtet. Ferner ist die Steuer- und Regelvorrichtung dafür eingerichtet, basierend auf dem mindestens einen Wärmespeicherkapazitätseingangssignal und dem mindestens einen Stromeingangssignal ein erstes Steuersignal für eine erste Wärmequelle zur Erwärmung von Brauchwasser, ein zweites Steuersignal für eine zweite Wärmequelle zur Erwärmung von Brauchwasser und ein drittes Steuersignal für eine Pumpe eines Brauchwasserkreises auszugeben. In Abhängigkeit der Eingangssignale kann die Steuer- und Regelvorrichtung keins, eins, mehrere oder alle der genannten Steuersignale ausgeben. Mittels des Wärmespeicherkapazitätseingangssignals erhält die Steuer- und Regelvorrichtung eine Information darüber, ob eine Wärmespeicherkapazität des Warmwasserspeichers vorliegt. Das Stromeingangssignal erhält eine Information darüber, ob ein von der Stromerzeugungseinrichtung erzeugter Strom zur Verfügung steht. Ist das Stromeingangssignal als Stromerzeugungseingangssignal ausgebildet, erhält das Signal eine Information darüber, ob die Photovoltaikanlage oder die Windkraftanlage Strom erzeugt und/oder ob von einer dieser Anlagen erzeugter Strom zur Verfügung steht, beispielsweise von einem Stromspeicher. Auf Basis der erhaltenen

Informationen aus dem Wärmespeicherkapazitätseingangssignal und dem Stromeingangssignal und gegebenenfalls weiterer Eingangssignale kann die Steuer- und Regelvorrichtung ein oder mehrere Ausgangssignale erzeugen, nämlich für die erste Wärmequelle, die zweite Wärmequelle und/oder die Pumpe. Insbesondere können durch entsprechende Ausgabe der Ausgangssignale die Schritte c) und/oder d) des vorbeschriebenen Verfahrens
ausgeführt werden. Ein weiteres Eingangssignal ist bevorzugt ein Heizbedarfseingangssignal, insbesondere ein Heizungsvorlauftemperatureingangssignal. Insbesondere kann Schritt d) des vorbeschriebenen Verfahrens in Abhängigkeit des Heizbedarfseingangssignals durchgeführt werden. Insbesondere können die erste Wärmequelle, die zweite Wärmequelle und/oder die Pumpe durch die jeweiligen Steuersignale an- oder ausgeschaltet werden beziehungsweise in ihrer Leistung reguliert werden. Ferner kann die Steuer- und Regelvorrichtung bevorzugt ein viertes Steuersignal für eine weitere Regelung, insbesondere eine Kesselregelung, ausgeben.

Die Heiz- und Brauchwasseranlage kann bevorzugt ferner eine Pumpe im Brauchwasserkreis und einen Wärmetauscher für die thermische Kopplung des Brauchwasserkreises und des Heizwasserkreises umfassen, wobei bevorzugt der Wärmetauscher ferner zur thermischen Kopplung des Brauchwasserkreises und/oder des Heizwasserkreises mit der ersten Wärmequelle ausgebildet ist.

### KURZE BESCHREIBUNG DERZEICHNUNGEN

Die Erfindung wird im Folgenden mit Bezug auf die Zeichnungen anhand verschiedener, bevorzugter Ausführungsformen beispielhaft erläutert. Es zeigen schematisch:
- Figur 1: eine Heiz- und Brauchwasseranlage gemäß einer ersten Ausführungsform;
- Figur 2:: eine Heiz- und Brauchwasseranlage gemäß einer zweiten Ausführungsform;
- Figur 3a:: ein Ablaufdiagramm eines ersten Teilverfahrens einer Ausführungsform des Verfahrens;
- Figur 3b:: ein Ablaufdiagramm eines zweiten Teilverfahrens derselben Ausführungsform des Verfahrens.

### BEVORZUGTE AUSFÜHRUNGSFORMEN DER ERFINDUNG

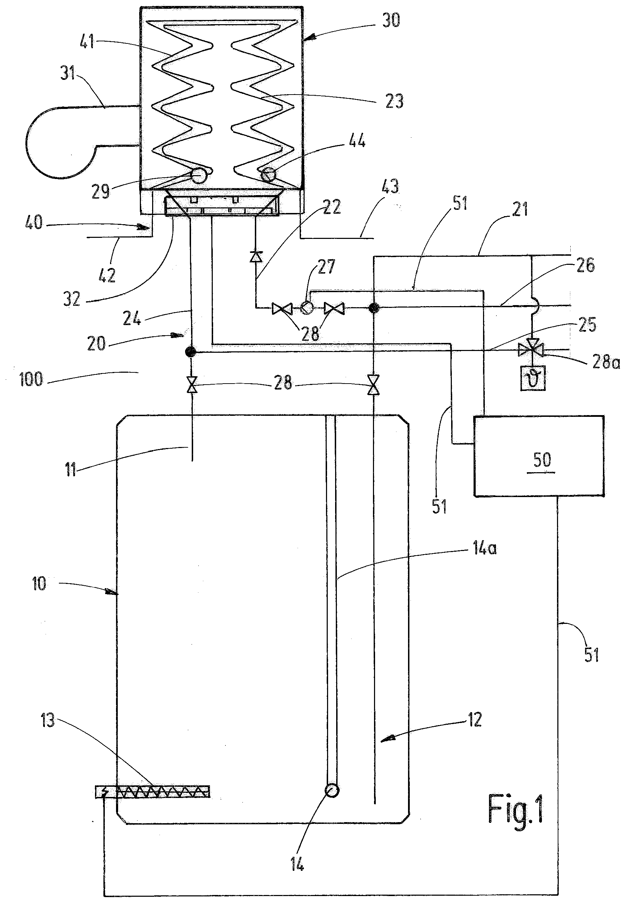

Figur 1 zeigt eine Heiz- und Brauchwasseranlage 100. Diese umfasst einen Warmwasserspeicher 10, der einen Warmwasseranschluss 11 und einen Kaltwasseranschluss 12 aufweist. Der Kaltwasseranschluss 12 ist von oben in den Warmwasserspeicher 10 eingeführt und erstreckt sich bis in den unteren Bereich des Warmwasserspeichers 10, sodass das kalte Wasser erst im unteren Bereich austreten kann. Im unteren Bereich des Warmwasserspeichers 10 ist ferner ein Elektroheizstab, beispielsweise mit einer Leistung von bis zu 3 kW, angeordnet. Ferner ist ein Leitungssystem eines Brauchwasserkreises 20 vorgesehen. Der Brauchwasserkreis 20 umfasst eine Kaltwasserzuleitung 21, über die dem Brauchwasserkreis 20 frisches Kaltwasser, beispielsweise von einem Hauptwasseranschluss eines Gebäudes, zugeführt wird. Von der Kaltwasserzuleitung 21 zweigt die Leitung des Kaltwasseranschlusses 12 ab, der in den Warmwasserspeicher 10 führt. Ferner zweigt von der Leitung der Kaltwasserzuleitung 21 eine Wärmetauscherzuleitung 22 ab, die von der Kaltwasserzuleitung 21 zu einem Wärmetauscher 30 führt. Ein, insbesondere aus Kupferrohr, hergestellter, mäandernden Wärmetauscherleitungsabschnitt 23 des Brauchwasserkreises 20 führt durch den Wärmetauscher 30 hindurch. An den Ausgang des Wärmetauscherleitungsabschnitts 23 schließt sich eine Wärmetauscherableitung 24 an. Von der Wärmetauscherableitung 24 zweigt die Leitung des Warmwasseranschlusses 11 des Warmwasserspeichers 10 ab. Ferner zweigt von der Wärmetauscherableitung 24 eine Warmwasserzuleitung 25 ab, die das erwärmte Wasser den jeweiligen Verbrauchern im Gebäude zuführt. In der Warmwasserzuleitung 25 ist ein Drei-Wege-Thermostatventil 28a als Verbrühschutz vorgesehen, von dem ferner eine Leitung zu der Kaltwasserzuleitung 21 führt. Ferner ist noch eine Zirkulationsleitung 26 vorgesehen, die an die Kaltwasserzuleitung 21 angeschlossen, insbesondere in dem Punkt, in dem auch die Wärmetauscherzuleitung 22 und der Kaltwasseranschluss 12 an die Kaltwasserzuleitung 21 anschließen. Ferner ist ein Heizwasserkreis 40 vorgesehen, der einen durch den Wärmetauscher 30 geführten, insbesondere aus Kupferrohr hergestellten, mäandernden Wärmetauscherleitungsabschnitt 41 aufweist. Der Heizkreis 40 weist ferner eine Heizkreispumpe 44, einen Heizungsvorlauf 42 und einen Heizungsrücklauf 43 auf, die sich jeweils an den Wärmetauscherleitungsabschnitt 41 des Heizwasserkreises 40 anschließen. An den Wärmetauscher 30 ist ferner ein Brenner 31 angeschlossen, der insbesondere als Gasbrenner ausgebildet ist und der thermisch mit dem Wärmetauscher 30 gekoppelt ist. Am Wärmetauscher ist ferner eine Kesselregelung 32 vorgesehen, über die insbesondere der Brenner 31 regelbar ist.

In der Wärmetauscherzuleitung 22 ist ferner eine Pumpe 27, insbesondere eine Speicherladepumpe, vorgesehen. Darüber hinaus umfasst der Heizkreis 20 verschiedene Ventile 28, die auch als Schieber ausgeführt sein können. Im Wärmetauscherleitungsabschnitt 23 ist ferner ein Temperaturfühler 29 vorgesehen. Ein weiterer Temperaturfühler 14 ist im unteren Bereich des Warmwasserspeichers 10 vorgesehen. Der Temperaturfühler 14 ist über eine Leitung 14a von oben bis zum unteren Bereich des Warmwasserspeichers 10 in diesen eingebracht. In der Darstellung der Fig. 1 sind der Warmwasserspeicher 10 und der Wärmetauscher 30 beabstandet voneinander angeordnet. Alternativ könnten beide Komponenten aber auch aneinandergrenzend und/oder in einem gemeinsamen Gehäuse angeordnet sein. Im letzteren Fall wären dann auch die zwischen dem Warmwasserspeicher 10 und dem Wärmetauscher 30 liegenden Leitungen und weiteren Bauteile, wie Pumpe 27, zweckmäßig innerhalb des gemeinsamen Gehäuses angeordnet.

Die Heiz- und Brauchwasseranlage 100 umfasst ferner eine Steuer- und/oder Regelvorrichtung 50. Diese ist über Steuerleitungen 51 mit der Pumpe 27, der Kesselregelung 32 und dem Elektroheizstab 13 verbunden. Ferner führt eine Leitung 52 von dem Temperaturfühler 14 des Warmwasserspeichers 10 zur Steuer- und/oder Regelvorrichtung 50.

Im regulären Betrieb der Heiz- und Brauchwasseranlage, insbesondere im Zapfbetrieb, wird Warmwasser über die Warmwasserzuleitung 25 entnommen. Kann vom Wärmetauscher 30 nicht ausreichend Warmwasser zur Verfügung gestellt werden, wird zusätzlich Warmwasser aus dem Warmwasserspeicher 10 über den Warmwasseranschluss 11 entnommen und dem Warmwasserspeicher 10 wird über den Kaltwasseranschluss 12 Kaltwasser zugeführt. Gleichzeitig wird dem Wärmetauscher 30, insbesondere dem Wärmetauscherleitungsabschnitt 23, Kaltwasser über die Kaltwasserzuleitung 22 und die Wärmetauscherzuleitung 22 zugeführt, insbesondere indem die Pumpe 27 geschaltet wird. Durch die Zuführung von Kaltwasser über den Kaltwasseranschluss nimmt die vom Temperaturfühler 14 gemessene Temperatur im Warmwasserspeicher 10 ab. Nach Beendigung des Zapfvorgangs läuft die Pumpe 27 zunächst weiter und lädt den Warmwasserspeicher mit im Wärmetauscher 30 erwärmtem Wasser über den Warmwasseranschluss 11 auf, bis die vom Temperaturfühler 14 gemessene Temperatur einem vorgegebenen Sollwert entspricht. Danach wird die Pumpe 27 abgeschaltet.

Wird die Heiz- und Brauchwasseranlage mit dem der Erfindung zugrundeliegenden Verfahren betrieben, wird nach Feststellung, dass eine Wärmespeicherkapazität des Warmwasserspeicher 10 vorliegt und Strom der Stromerzeugungsvorrichtung (hier nicht dargestellt) zur Verfügung steht, der Elektroheizstab 13 mit dem Strom der Stromerzeugungsvorrichtung gespeist und angesteuert beziehungsweise eingeschaltet. Bei der vorliegenden Ausführungsform ist bevorzugt nur der Elektroheizstab 13 mit der Stromerzeugungsvorrichtung gekoppelt. Ist das Warmwasser im Warmwasserspeicher 10 ausreichend erwärmt, beispielsweise zeigt der Temperaturfühler 14 eine Temperatur an, die oberhalb einer vorgegebenen Temperatur oder oberhalb der Heizungsvorlauftemperatur, gegebenenfalls zuzüglich eines vorgegebenen Zuschlags, liegt, wird die Pumpe 27 angesteuert und pumpt Warmwasser über den Kaltwasseranschluss 12 zum Wärmetauscher 30. Im Wärmetauscher 30 wird die Wärme des Brauchwassers vom Wärmetauscherleitungsabschnitt 23 an den Wärmetauscherleitungsabschnitt 41 des Heizkreises 40 übertragen. Entsprechend kühlt sich das Brauchwasser im Wärmetauscherleitungsabschnitt 23 ab und wird anschließend nach Austritt aus dem Wärmetauscher 30 über den Warmwasseranschluss 11 wieder dem Warmwasserspeicher 10 zugeführt. Die Steuer- und/oder Regelvorrichtung 50 kann über Ausgabe entsprechender Steuersignale ferner die Kesselregelung 32 ansteuern, die wiederum den Brenner 31 regelt bzw. schaltet. So kann der Brenner während das erfindungsgemäße Verfahren betrieben wird, je nach Bedarf abgeschaltet oder zugeschaltet werden, um gegebenenfalls das Wasser Heizkreises 40 zusätzlich zu erwärmen, insbesondere wenn die Erwärmung durch den Brauchwasserkreis 30 allein nicht ausreicht, beispielsweise um den Heizbedarf zu decken. Auch kann die Leistung des Brenners 31 je nach Bedarf über die Steuer- und/oder Regelvorrichtung und die Kesselregelung 32 geregelt werden.

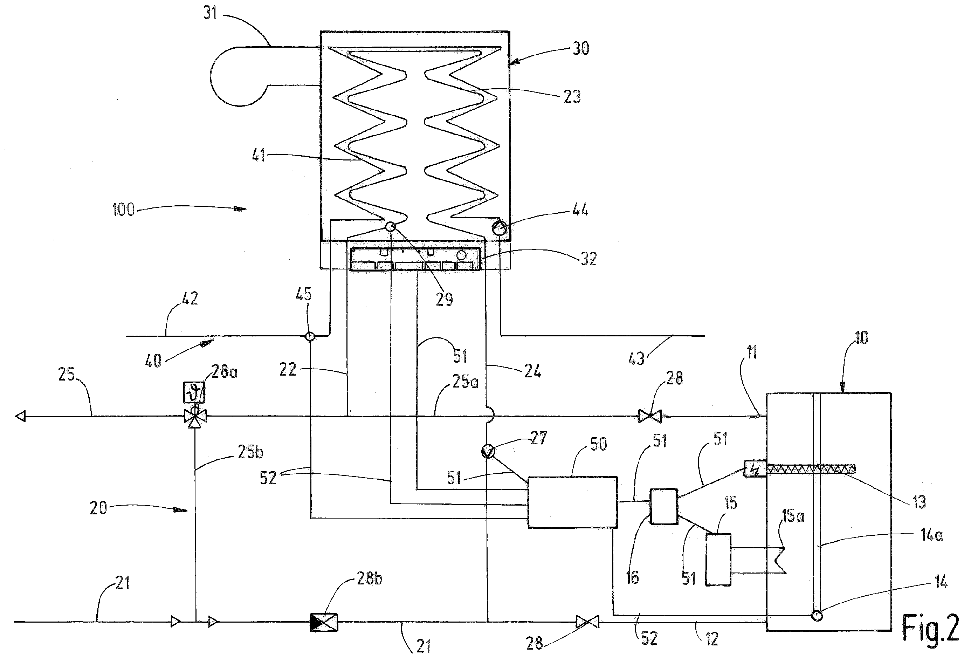

In Figur 2 ist eine weitere Ausführungsform einer Heiz- und Brauchwasseranlage dargestellt, wobei gleiche Bestandteile mit gleichen Bezugszeichen versehen sind. Auch bei dieser Ausführungsform ist im Warmwasserspeicher 10 wieder ein Elektroheizstab 13 vorgesehen. Zusätzlich ist jedoch eine Wärmepumpe 15 vorgesehen, deren Kondensator 15a im Warmwasserspeicher 10 angeordnet ist und über den die Wärmepumpe 15 das Wasser im Warmwasserspeicher 10 erwärmen kann. Alternativ kann der Kondensator auch außen am Warmwasserspeicher angeordnet sein.

Ferner umfasst die Heiz- und Brauchwasseranlage 100 ebenfalls einen Wärmetauscher 30, der in ähnlicher Weise wie bei der Ausführungsform gemäß Figur 1 ausgebildet ist, insbesondere verlaufen durch den Wärmetauscher 30 ein Wärmetauscherleitungsabschnitt 23 des Brauchwasserkreises 20 und ein Wärmetauscherleitungsabschnitt 41 des Heizwasserkreises 40. Im Heizungsrücklauf 43 ist ferner eine Heizkreispumpe 44 vorgesehen. An dem Wärmetauscher 30 ist ferner ein Brenner 31 angeschlossen, der insbesondere als Gasbrenner ausgebildet ist und der thermisch mit dem Wärmetauscher 30 gekoppelt ist. Am Wärmetauscher ist ferner eine Kesselregelung 32 vorgesehen, über die insbesondere der Brenner 31 regelbar ist.

Über die Kaltwasserzuleitung 21 wird von einem Wasserhauptanschluss eines Gebäudes kaltes Brauchwasser zu dem im unteren Bereich des Warmwasserspeichers 10 angeordneten Kaltwasseranschluss 12 gefördert. Das erwärmte Wasser kann im oberen Bereich des Warmwasserspeichers 10 über den Warmwasseranschluss 11 wieder entnommen werden und fließt von dort in eine Warmwasserzuleitung 25, über die das Warmwasser zu den Verbrauchern im Gebäude gelangt. Ein erster Abschnitt 25a der Warmwasserzuleitung 25 verläuft vom Warmwasserspeicher 10 bis zu einer Wärmetauscherzuleitung 22, die von der Warmwasserzuleitung 25 abzweigt. Die Wärmetauscherzuleitung 22 führt zum Wärmetauscher 30 und ist an den Wärmetauscherleitungsabschnitt 23 angeschlossen. Am Ende des Wärmetauscherleitungsabschnitts 23 ist eine Wärmetauscherableitung 24 vorgesehen, die wiederum an die Kaltwasserzuleitung 21 anschließt. In Fließrichtung vor dem Anschluss der Wärmetauscherableitung 24 an die Kaltwasserzuleitung 21 ist an der Kaltwasserzuleitung 21 ein Rückschlagventil 28b vorgesehen. In der Wärmetauscherableitung 24 ist eine Pumpe 27 vorgesehen. Im weiteren Verlauf der Warmwasserzuleitung 25, in Fließrichtung betrachtet hinter dem Abzweig der Wärmetauscherzuleitung 22, ist ein Drei-Wege-Thermostatventil 28a vorgesehen. Von dem Drei-Wege-Thermostatventil 28a zweigt eine Verbindungsleitung 25b ab, die den Strang der Warmwasserzuleitung 25 mit dem Strang der Kaltwasserzuleitung 21 verbindet.

Im regulären Betrieb, insbesondere im Zapfbetrieb, wird das Wasser im Warmwasserspeicher 10 über die Wärmepumpe 15 und gegebenenfalls zusätzlich über den Elektroheizstab 13 erwärmt und über den Warmwasseranschluss 11 und den ersten Abschnitt 25a der Warmwasserzuleitung 25 an die Warmwasserzuleitung 25 abgegeben. Wird die Heiz- und Brauchwasseranlage 100 gemäß dem erfindungsgemäßen Verfahren betrieben, fördert die Pumpe 27 Wasser aus dem ersten Abschnitt 25a der Warmwasserzuleitung 25 über die Wärmetauscherzuleitung 22 an den Wärmetauscher 30. Dort gibt das erwärmte Brauchwasser Wärme an den Heizwasserkreis 40 ab. Das abgekühlte Brauchwasser tritt aus dem Wärmetauscher 30 aus und wird über die Wärmetauscherableitung 24 zur Kaltwasserzuleitung 21 geführt. Aufgrund des Rückschlagventils 28b wird das Brauchwasser dann weiter zum Kaltwasseranschluss 12 des Warmwasserspeichers 10 gefördert. Im Gegensatz zur Ausführungsform nach Figur 1 wird bei der Ausführungsform nach Figur 2, wenn die Heiz- und Brauchwasseranlage 100 mit dem erfindungsgemäßen Verfahren betrieben wird, das Wasser des Warmwasserspeichers 10 vom Warmwasseranschluss 11 zum Wärmetauscher 30 und zurück über den Kaltwasseranschluss 12 zum Warmwasserspeicher 10 geführt. Die Zirkulationsrichtung ist daher genauso wie beim regulären Zapfbetrieb, während sie sich bei der Ausführungsform nach Figur 1 genau umgekehrt zum regulären Zapfbetrieb verhält.

Bei der Heiz- und Brauchwasseranlage 100 nach Figur 2 ist ferner eine Steuer- und/oder Regeleinrichtung 50 eingezeichnet. Diese ist über Steuerleitungen 51 mit der Pumpe 27, der Kesselregelung 32 und einer Warmwasserspeicherregelung 16 verbunden. Die Warmwasserspeicherregelung 16 ist wiederum über Steuerleitungen mit der Wärmepumpe 15 und dem Elektroheizstab 13 verbunden. Die Steuer- und/oder Regeleinrichtung 50 kann Regel- und/oder Steuersignale über die Steuerleitung 51 and die Warmwasserspeicherregelung 16 ausgeben. Entsprechend dieser Signale steuert die Warmwasserspeicherregelung 16 dann die Wärmepumpe 15 und/oder den Elektroheizstab 13 an. Ferner führen Leitungen 52 von dem Temperaturfühler 14 des Warmwasserspeichers 10, dem Temperaturfühler 29 des Wärmetauscherleitungsabschnitts 23 und einem Temperaturfühler 45 im Heizungsvorlauf 42 zur Steuer- und/oder Regelvorrichtung 50. Die Steuer- und/oder Regelvorrichtung 50 kann über Ausgabe entsprechender Steuersignale ferner die Kesselregelung 32 ansteuern, die wiederum den Brenner 31 regelt bzw. schaltet. So kann der Brenner während das erfindungsgemäße Verfahren betrieben wird, je nach Bedarf abgeschaltet oder zugeschaltet werden, um gegebenenfalls das Wasser Heizkreises 40 zusätzlich zu erwärmen, insbesondere wenn die Erwärmung durch den Brauchwasserkreis 30 allein nicht ausreicht, beispielsweise um den Heizbedarf zu decken. Auch kann die Leistung des Brenners 31 je nach Bedarf über die Steuer- und/oder Regelvorrichtung und die Kesselregelung 32 geregelt werden.

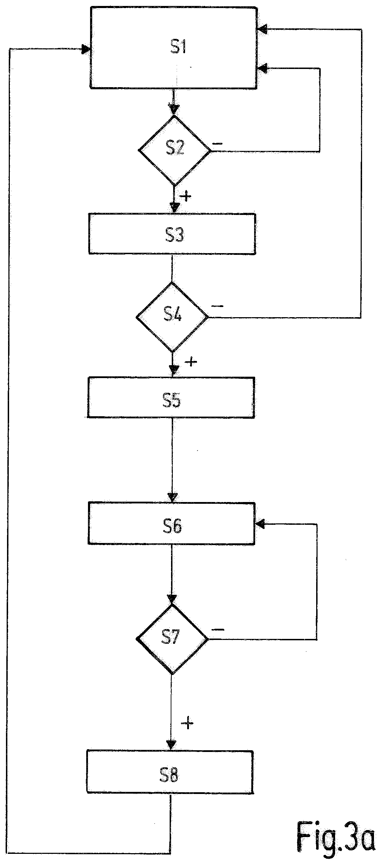

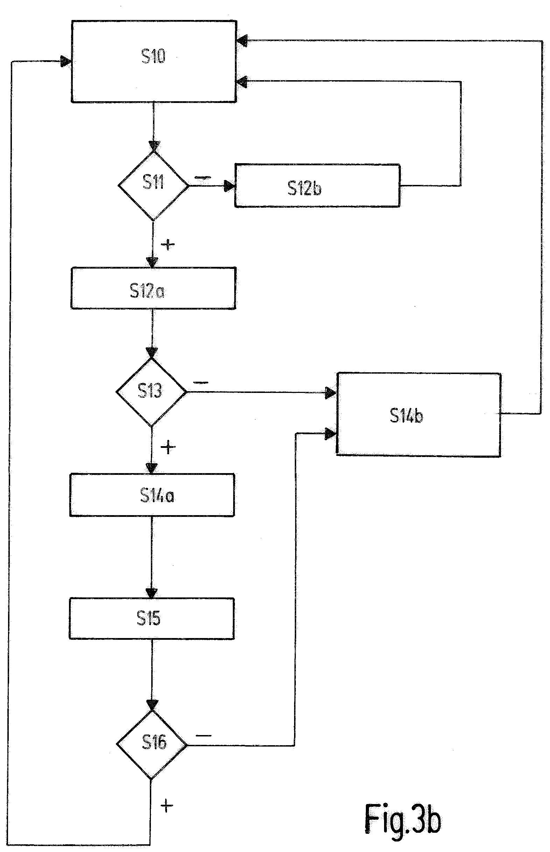

Figuren 3a und 3b zeigen Ablaufdiagramme zweier Teilverfahren eines Ausführungsbeispiels eines erfindungsgemäßen Verfahrens, insbesondere eines Regelverfahrens, wie es insbesondere von einer Steuer- und/oder Regelvorrichtung gemäß der vorliegenden Erfindung durchgeführt werden kann. Die beiden Teilverfahren können zeitgleich oder nacheinander durchgeführt werden, wobei die beiden Teilverfahren bevorzugt zeitgleich ablaufen. Insbesondere können die beiden Teilverfahren von derselben Steuer- und/oder Regelvorrichtung durchgeführt werden.

Bei dem ersten Teilverfahren, das in dem Ablaufdiagramm der Fig. 3a dargestellt ist, wird in einem ersten Schritt S1 ein Stromeingangssignal abgefragt. Im Schritt S2 wird festgestellt, ob ein von der Stromerzeugungsvorrichtung erzeugter Strom zur Verfügung steht. Ist dies nicht der Fall, wird erneut in Schritt S1 ein Stromeingangssignal abgefragt. Steht in Schritt S2 Strom zur Verfügung, wird in Schritt S3 ein Wärmespeicherkapazitätseingangssignal abgefragt. Das Wärmespeicherkapazitätseingangssignal kann beispielsweise ein Warmwasserspeichertemperatursignal sein. In Schritt S4 wird festgestellt, ob eine Wärmespeicherkapazität des Warmwasserspeichers vorliegt. Ist dies nicht der Fall, beginnt das Verfahren erneut in Schritt S1. Ist dies jedoch der Fall, wird in Schritt S5 ein elektrisches Heizelement, insbesondere ein Elektroheizstab, angesteuert und mittels des zur Verfügung stehenden Stroms betrieben. Dieser Schritt kann insbesondere bei der in Fig. 1 dargestellten Heiz- und Brauchwasseranlage durchgeführt werden. Alternativ kann auch eine Warmwasserspeicherregelung angesteuert, die dann selbstständig nach Ihrem eigenen Regelalgorithmen entscheidend, welche der ihr zugeordneten Wärmequellen Sie ansteuert, damit sie mit dem zur Verfügung stehenden Strom betrieben werden. Insbesondere kann dieser alternative Schritt bei einer Ausführung der Heiz- und Brauchwasseranlage gemäß Fig. 2 vorteilhaft sein, bei der dann die Warmwasserspeicherregelung entweder die Wärmepumpe oder den Elektroheizstab oder beide ansteuert. In einem nächsten Schritt S6 werden wieder das Stromeingangssignal und das Wärmespeicherkapazitätssignal abgefragt. In Schritt S7 wird festgestellt, ob weiterhin ein Strom zur Verfügung steht und der Warmwasserspeicher weiterhin eine Wärmespeicherkapazität aufweist. Sind beide Bedingungen erfüllt, werden wieder die beiden Signale in Schritt S6 abgefragt. Ist eine der beiden Bedingungen nicht erfüllt, wird dagegen in einem Schritt S8 das elektrische Heizelement angesteuert und abgeschaltet. Das (Teil-)Verfahren wird in Schritt S1 wieder von vorne begonnen.

Bei einem zweiten Teilverfahren, das in dem Ablaufdiagramm der Fig. 3b dargestellt ist, wird in einem Schritt S10 ein Heizbedarfseingangssignal, insbesondere ein Raumheizbedarfseingangssignal, abgefragt. Beispielweise kann das Heizbedarfseingangssignal auf Basis der Ist-Heizungsvorlauftemperatur und der Soll- Heizungsvorlauftemperatur ausgegeben werden. In Schritt S11 wird festgestellt, ob ein Heizbedarf vorliegt. Ist dies nicht der Fall, wird in Schritt S12b ein Steuersignal an eine im Brauchwasserkreis angeordnete Pumpe, insbesondere eine Speicherladepumpe, ausgegeben. Mit diesem Signal wird ein eventuell vorhandenes Einschaltsignal der Pumpe weggenommen. Mit anderen Worten wird die Pumpe, falls sie eingeschaltet war, abgeschaltet, Falls die Pumpe nicht eingeschaltet war ändert sich durch das Steuersignal nichts am Status der Pumpe. Danach wird erneut in Schritt S10 ein Heizbedarfseingangssignal abgefragt. Wird jedoch in Schritt S11 festgestellt, dass ein Heizbedarf besteht, wird in Schritt S12a ein Warmwasserspeichertemperatursignal abgefragt. In Schritt S13 wird überprüft, ob die Temperatur des Warmwasserspeichers oberhalb einer vorgegebenen Temperatur liegt. Diese vorgegebene Temperatur kann beispielsweise 55 °C betragen. Ist dies nicht der Fall, d.h., liegt die Ist-Temperatur nicht über der vorgegebenen Temperatur, wird in Schritt S14b ein Steuersignal, insbesondere an die Kesselregelung, ausgegeben. Das Steuersignal ist ein "Brenner-nicht-sperren-Signal", d.h., durch dieses Signal wird ein eventuell vorhandenes "Brenner-sperren-Signal" zurückgenommen. War der Brenner nicht gesperrt, ändert sich am Status des Brenners durch das Steuersignal nichts. Die Kesselregelung kann den Brenner entsprechend auf Basis ihrer normalen Regelalgorithmen betreiben. Danach wird in Schritt S10 erneut ein Heizbedarfseingangssignal abgefragt und die vorgeschriebenen, sich anschließenden Schritte werden wieder durchgeführt. Wird in Schritt S13 jedoch festgestellt, dass die die Ist-Temperatur oberhalb der vorgegebenen Temperatur liegt, werden in Schritt S14a ein "Brenner-Sperren-Signal" und ein Einschaltsignal für die Pumpe des Brauchwasserkreises ausgegeben. Hierdurch werden zum einen der Brenner ausgeschaltet, sollte er im Betrieb gewesen sein, und zum anderen die Pumpe eingeschaltet, durch die das erwärmte Wasser des Warmwasserspeichers zum Wärmetauscher gefördert wird. Anschließend werden in einem Schritt S15 ein Heizungsvorlauftemperatur-Ist-Eingangssignal und ein Heizungsvorlauftemperatur-Soll-Eingangssignal abgefragt. Wird in Schritt S16 festgestellt, dass die Ist-Heizungsvorlauftemperatur kleiner als die Soll-Heizungsvorlauftemperatur ist, wird als nächstes in Schritt S14b wieder das "Brenner-nicht-sperren-Signal" ausgegeben und anschließend der Verfahrensablauf wieder im Schritt S10 begonnen. Ist die Ist- Heizungsvorlauftemperatur dagegen gleich oder größer als die Soll-Heizungsvorlauftemperatur wird im Anschluss an Schritt S16 direkt wieder der Verfahrensablauf in Schritt S10 begonnen.

### Bezugszeichenliste

- 100: Heiz- und Brauchwasseranlage

- 10: Warmwasserspeicher
- 11: Warmwasseranschluss
- 12: Kaltwasseranschluss
- 13: Elektroheizstab
- 14: Temperaturfühler
- 14a: Leitung des Temperaturfühlers
- 15: Wärmepumpe
- 15a: Wärmepumpenkondensator
- 16: Warmwasserspeicherregelung

- 20: Brauchwasserkreis
- 21: Kaltwasserzuleitung
- 22: Wärmetauscherzuleitung
- 23: Wärmetauscherleitungsabschnitt
- 24: Wärmetauscherableitung
- 25: Warmwasserzuleitung
- 25a: Erster Abschnitt der Warmwasserzuleitung
- 25b: Verbindungsleitung
- 26: Zirkulationsleitung
- 27: Pumpe
- 28: Ventil
- 28a: Drei-Wege-Thermostatventil
- 28b: Rückschlagventil
- 29: Temperaturfühler

- 30: Wärmetauscher
- 31: Brenner
- 32: Kesselregelung

- 40: Heizwasserkreis
- 41: Wärmetauscherleitungsabschnitt
- 42: Heizungsvorlauf
- 43: Heizungsrücklauf
- 44: Heizkreispumpe
- 45: Temperaturfühler
- 50: Steuer- und/oder Regelvorrichtung
- 51: Steuerleitungen
- 52: Reglerleitungen

- S1 bis S8: Verfahrensschritte
- S10 bis S16: Verfahrensschritte

## Patentansprüche

1. Verfahren zum Betreiben einer Heiz- und Brauchwasseranlage (100), die einen Warmwasserspeicher (10) für Brauchwasser, einen Brauchwasserkreis (20), einen Heizwasserkreis (40), eine erste Wärmequelle zur Erwärmung des Brauchwassers, und eine zweite Wärmequelle zur Erwärmung des Brauchwassers umfasst, wobei die erste Wärmequelle und die zweite Wärmequelle im Warmwasserspeicher (10) oder an anderer Stelle im Brauchwasserkreis (20) angeordnet sind, wobei der Brauchwasserkreis (20) und der Heizwasserkreis (40) thermisch gekoppelt sind, umfassend folgende Schritte:
a) Feststellen, ob eine Wärmespeicherkapazität des Warmwasserspeichers (10) vorliegt;
b) Feststellen, ob von einer Stromerzeugungsvorrichtung erzeugter Strom zur Verfügung steht, wobei die Stromerzeugungsvorrichtung mit der ersten Wärmequelle und/oder mit der zweiten Wärmequelle gekoppelt ist und/oder die Stromerzeugungsvorrichtung mit der ersten Wärmequelle und/oder der zweiten Wärmequelle über ein intelligentes Stromnetz verbunden ist;
c) Wenn eine Wärmespeicherkapazität vorliegt und von der Stromerzeugungsvorrichtung erzeugter Strom zur Verfügung steht, speisen der ersten Wärmequelle und/oder der zweiten Wärmequelle mit dem Strom der Stromerzeugungsvorrichtung und erwärmen des Brauchwassers, insbesondere im Warmwasserspeicher (10), mittels der mit dem Strom der Stromerzeugungsvorrichtung gespeisten ersten Wärmequelle und/oder zweiten Wärmequelle;
d) Übertragen von thermischer Energie des Brauchwassers im Brauchwasserkreis (20) an Heizwasser im Heizwasserkreis (40), wenn ein Heizbedarf vorliegt.

2. Verfahren gemäß Anspruch 1,
**dadurch gekennzeichnet,**
**dass** die thermische Kopplung des Brauchwasserkreises (20) und des Heizwasserwasserkreises (40) nicht im Bereich des Heizungsrücklaufs des Heizwasserkreises (40) erfolgt.

3. Verfahren gemäß Anspruch 1 oder 2,
**dadurch gekennzeichnet,**
**dass** die Temperatur des Brauchwassers im Warmwasserspeicher (10), bevorzugt in vorgegebenen, insbesondere kontinuierlichen Abständen, besonders bevorzugt fortlaufend, gemessen wird, wobei bevorzugt die gemessene Temperatur des Brauchwassers mit einer ersten vorgegebenen Temperatur verglichen wird, wobei bei Überschreiten der ersten vorgegebenen Temperatur die Übertragung von thermischer Energie gemäß Schritt d) begonnen wird, wobei insbesondere die erste vorgegebene Temperatur mindestens 85°C, bevorzugt mindestens 75°C, ferner bevorzugt mindestens 65°C, besonders bevorzugt mindestens 60°C, ganz besonders bevorzugt mindestens 50°C beträgt.

4. Verfahren gemäß einem der vorhergehenden Ansprüche,
**dadurch gekennzeichnet,**
**dass** das Verfahren ferner einen oder mehrere der folgenden Schritte umfasst:
e) Beenden des Erwärmens des Brauchwassers wenn keine Wärmespeicherkapazität des Warmwasserspeichers vorliegt und/oder wenn kein oder kein ausreichender Strom von der Stromerzeugungsvorrichtung zur Speisung der ersten und/oder zweiten Wärmequelle zur Verfügung steht,
f) Beenden des Übertragens von thermischer Energie des Brauchwassers ans Heizwasser, wenn die Temperatur des Brauchwassers, insbesondere gemessen im Warmwasserspeicher (10), eine zweite vorgegebene Temperatur und/oder eine Heizungsvorlauftemperatur des Heizwasserkreises (40) unterschreitet, wobei bevorzugt die zweite Temperatur maximal 70°C, ferner bevorzugt maximal 65°C, besonders bevorzugt maximal 60°C, ganz besonders bevorzugt maximal 50°C beträgt,
g) Zuschalten einer weiteren Wärmequelle zur Erwärmung des Heizwassers, wenn die thermische Energie gemäß Schritt d) übertragen wird und eine Heizungsvorlauftemperatur des Heizwasserkreises (40) unterhalb einer dritten vorgegebenen Temperatur liegt.

5. Verfahren gemäß einem der vorhergehenden Ansprüche,
**dadurch gekennzeichnet,**
**dass** die Heiz- und Brauchwasseranlage (100) für die thermische Kopplung des Brauchwasserkreises (20) und des Heizwasserkreises (40) einen Wärmetauscher (30) umfasst, wobei die Übertragung von thermischer Energie in Schritt d) über den Wärmetauscher (30) erfolgt, wobei bevorzugt die thermische Kopplung zwischen Brauchwasserkreis (20) und Heizwasserkreis (40) ausschließlich im Wärmetauscher (30) erfolgt.

6. Verfahren gemäß Anspruch 5,
**dadurch gekennzeichnet,**
**dass** im Brauchwasserkreis (20) eine Pumpe (27), insbesondere eine Speicherladepumpe, vorgesehen ist, wobei mittels der Pumpe (27) das erwärmte Brauchwasser des Warmwasserspeichers (10) zur Übertragung von thermischer Energie vom Brauchwasser an das Heizwasser zum Wärmetauscher (30) und von diesem wieder zurück zum Warmwasserspeicher (10) gefördert wird, wobei bevorzugt die Pumpe (27) in einem Kaltwasserstrang des Brauchwasserkreises (20) angeordnet ist.

7. Verfahren gemäß einem der vorhergehenden Ansprüche,
**dadurch gekennzeichnet,**
**dass** die erste Wärmequelle einen Brenner (31), insbesondere einen Gasbrenner, und die zweite Wärmequelle ein elektrisches Heizelement, insbesondere einen Elektroheizstab (13), umfasst.

8. Verfahren gemäß Anspruch 7,
**dadurch gekennzeichnet,**
**dass** die erste Wärmequelle zur Erwärmung des Brauchwassers und zur Erwärmung des Heizwassers ausgebildet ist, wobei bevorzugt die erste Wärmequelle und der Heizwasserkreis (40) mittels eines Wärmetauschers (30) thermisch gekoppelt sind, wobei besonders bevorzugt zusätzlich die erste Wärmequelle und der Brauchwasserkreis (20) mittels des Wärmetauschers (30) thermisch gekoppelt sind, und wobei ganz besonders bevorzugt zusätzlich der Brauchwasserkreis (20) und der Heizwasserkreis (40) mittels des Wärmetauschers (30) thermisch gekoppelt sind.

9. Verfahren gemäß Anspruch 8,
**dadurch gekennzeichnet,**
**dass** wahlweise oder zwingend die erste Wärmequelle abgeschaltet oder die Leistung der ersten Wärmequelle reduziert wird, wenn gemäß Schritt d) thermische Energie vom Brauchwasser an das Heizwasser übertragen wird.

10. Verfahren gemäß einem der Ansprüche 7 bis 9 rückbezogen auf Anspruch 6, **dadurch gekennzeichnet,**
**dass** der Warmwasserspeicher (10) einen Kaltwasseranschluss (12) und einen Warmwasseranschluss (11) aufweist, wobei die Pumpe (27) das erwärmte Brauchwasser über den Kaltwasseranschluss (12) zum Wärmetauscher (30) und vom Wärmetauscher (30) über den Warmwasseranschluss (11) zurück zum Warmwasserspeicher (10) fördert.

11. Verfahren gemäß einem der Ansprüche 1 bis 6,
**dadurch gekennzeichnet,**
**dass** die erste Wärmequelle eine Wärmepumpe (15) und die zweite Wärmequelle ein elektrisches Heizelement, insbesondere einen Elektroheizstab (13), umfasst, wobei bevorzugt die erste und die zweite Wärmequelle mit der Stromerzeugungsvorrichtung gekoppelt sind.

12. Verfahren gemäß Anspruch 11,
**dadurch gekennzeichnet,**
**dass** während des Schrittes c) wahlweise nur die erste Wärmequelle, nur die zweite Wärmequelle oder die erste und die zweite Wärmequelle das Brauchwasser erwärmen.

13. Verfahren gemäß Anspruch 11 oder 12 rückbezogen auf Anspruch 6,
**dadurch gekennzeichnet,**
**dass** der Warmwasserspeicher (10) einen Kaltwasseranschluss (12) und einen Warmwasseranschluss (11) aufweist, wobei die Pumpe (27) das erwärmte Brauchwasser über den Warmwasseranschluss (11) zum Wärmetauscher (30) und vom Wärmetauscher (30) über den Kaltwasseranschluss (12) zurück zum Warmwasserspeicher (10) fördert.

14. Steuer- und/oder Regelvorrichtung (50) für eine Heiz- und Brauchwasseranlage (100),
**dadurch gekennzeichnet,**
**dass** die Steuer- und/oder Regelvorrichtung (50) zur Durchführung eines Verfahrens gemäß einem der vorhergehenden Ansprüche ausgebildet ist, und gegebenenfalls
**dass** die Steuer- und/oder Regelvorrichtung (50) zum Empfang mindestens eines Wärmespeicherkapazitätseingangssignals und mindestens eines Stromeingangssignals, bevorzugt ein Stromerzeugungseingangssignal einer Photovoltaikanlage oder einer Windkraftanlage, eingerichtet ist, wobei die Steuer- und/oder Regelvorrichtung (50) ferner basierend auf dem mindestens einen Wärmespeicherkapazitätseingangssignals und dem mindestens einen Stromeingangssignals zur Ausgabe eines ersten Steuersignals für eine erste Wärmequelle zur Erwärmung von Brauchwasser, eines zweiten Steuersignals für eine zweite Wärmequelle zur Erwärmung von Brauchwasser und eines dritten Steuersignals für eine Pumpe (27) eines Brauchwasserkreises (20) eingerichtet ist.

15. Heiz- und Brauchwasseranlage (100), umfassend eine Steuer- und/oder Regelvorrichtung (50) gemäß Anspruch 14, einen Warmwasserspeicher (10) für Brauchwasser, einen Brauchwasserkreis (20), eine Pumpe (27) im Brauchwasserkreis (20), einen Heizwasserkreis (40), eine erste Wärmequelle zur Erwärmung des Brauchwassers, eine zweite Wärmequelle zur Erwärmung des Brauchwassers, wobei die erste Wärmequelle und die zweite Wärmequelle im Warmwasserspeicher (10) oder an anderer Stelle im Brauchwasserkreis (20) angeordnet sind, und einen Wärmetauscher (30) für die thermische Kopplung des Brauchwasserkreises (20) und des Heizwasserkreises (40), wobei bevorzugt der Wärmetauscher (30) ferner zur thermischen Kopplung des Brauchwasserkreises (20) und/oder des Heizwasserkreises (40) mit der ersten Wärmequelle ausgebildet ist.

## Claims

1. Method for operating a heating and domestic water system (100), which comprises a power generation device, a hot water tank (10) for domestic water, a domestic water circuit (20), a heating water circuit (40), a first heat source for heating the domestic water, and a second heat source for heating the domestic water, wherein the second heat source is arranged in the hot water tank (10) or at another place within the domestic water circuit (20), wherein the domestic water circuit (20) and the heating water circuit (40) are thermally coupled, comprising the following steps:
a) determining whether there is a heat storage capacity of the hot water tank (10);
b) determining whether power generated by the power generation device is available, wherein the power generation device is coupled to the first heat source and / or to the second heat source and / or the power generation device is connected via a smart grid with the first heat source and / or to the second heat source;
c) if there is a heat storage capacity and power generated by the power generation device is available, supplying the first heat source and / or the second heat source with the power of the power generation device and heating the domestic water, in particular in the hot water tank (10), by means of the first heat source and / or second heat source fed by the power of the power generation device;
d) transferring thermal energy of the domestic water in the domestic water circuit (20) to heating water in the heating water circuit (40) when heating is required,
**characterized in that** the first heat source is arranged in the hot water tank (10) or at another place within the domestic water circuit (20).

2. Method according to claim 1,
**characterized in that**
the thermal coupling of the domestic water circuit (20) and the heating water circuit (40) does not take place in the area of the heating return of the heating water circuit (40).

3. Method according to claim 1 or 2,
**characterized in that**
the temperature of the domestic water in the hot water tank (10) is measured, preferably at predetermined, in particular continuous intervals, particularly preferably continuously, wherein the measured temperature of the domestic water is preferably compared with a first predetermined temperature, wherein if the first predetermined temperature is exceeded, the transfer of thermal energy is started according to step d), wherein in particular the first predetermined temperature is at least 85°C, preferably at least 75°C, further preferably at least 65°C, particularly preferably at least 60°C, very particularly preferably at least 50°C.

4. Method according to one of the preceding claims,
**characterized in that**
the method further comprises one or more of the following steps:
e) stopping the heating of the domestic water if there is no heat storage capacity of the hot water tank and / or if there is no or insufficient power available from the power generation device to feed the first and / or second heat source,
f) stopping the transfer of thermal energy of the domestic water to the heating water if the temperature of the domestic water, in particular measured in the hot water tank (10), falls below a second predetermined temperature and / or a heating flow temperature of the heating water circuit (40), wherein preferably the second temperature is at most 70°C, further preferably at most 65°C, particularly preferably at most 60°C, very particularly preferably at most 50°C,
g) switching on a further heat source for heating the heating water if the thermal energy is transferred according to step d) and a heating flow temperature of the heating water circuit (40) is below a third predetermined temperature.

5. Method according to one of the preceding claims,
**characterized in that**
the heating and domestic water system (100) for the thermal coupling of the domestic water circuit (20) and the heating water circuit (40) comprises a heat exchanger (30), wherein the transfer of thermal energy in step d) is carried out via the heat exchanger (30), wherein preferably the thermal coupling between the domestic water circuit (20) and the heating water circuit (40) takes place exclusively in the heat exchanger (30).

6. Method according to claim 5,
**characterized in that**
a pump (27), in particular a storage charging pump, is provided in the domestic water circuit (20), wherein the heated domestic water of the hot water tank (10) by means of the pump (27) is conveyed to the heat exchanger (30) and from there back to the hot water tank (10) for transferring thermal energy from the domestic water to the heating water, wherein preferably the pump (27) is arranged in a cold water line of the domestic water circuit (20).

7. Method according to one of the preceding claims,
**characterized in that**
the first heat source comprises a burner (31), in particular a gas burner, and the second heat source comprises an electric heating element, in particular an electric heating rod (13).

8. Method according to claim 7,
**characterized in that**
the first heat source is designed for heating the domestic water and for heating the heating water, wherein preferably the first heat source and the heating water circuit (40) are thermally coupled by means of a heat exchanger (30), wherein particularly preferably additionally the first heat source and the domestic water circuit (20) are thermally coupled by means of the heat exchanger (30), and wherein very particularly preferably additionally the domestic water circuit (20) and the heating water circuit (40) are thermally coupled by means of the heat exchanger (30).

9. Method according to claim 8,
**characterized in that**
optionally or mandatorily the first heat source is switched off or the output of the first heat source is reduced if, according to step d), thermal energy is transferred from the domestic water to the heating water.

10. Method according to one of claims 7 to 9, referring back to claim 6,
**characterized in that**
the hot water tank (10) has a cold water connection (12) and a hot water connection (11), wherein the pump (27) conveys the heated domestic water via the cold water connection (12) to the heat exchanger (30) and from the heat exchanger (30) via the hot water connection (11) back to the hot water tank (10).

11. Method according to one of claims 1 to 6,
**characterized in that**
the first heat source comprises a heat pump (15) and the second heat source comprises an electric heating element, in particular an electric heating rod (13), wherein preferably the first and the second heat source are coupled to the power generating device.

12. Method according to claim 11,
**characterized in that**
during step c) optionally only the first heat source, only the second heat source or the first and the second heat source heat the domestic water.

13. Method according to claim 11 or 12 with reference to claim 6,
**characterized in that**
the hot water tank (10) has a cold water connection (12) and a hot water connection (11), wherein the pump (27) conveys the heated domestic water via the hot water connection (11) to the heat exchanger (30) and from the heat exchanger (30) via the cold water connection (12) back to the hot water tank (10).

14. Heating and domestic water system (100) comprising a power generation device, a hot water tank (10) for domestic water, a domestic water circuit (20), a heating water circuit (40), a first heat source for heating the domestic water, second heat source for heating the domestic water, wherein the second heat source is arranged in the hot water tank (10) or at another place within the domestic water circuit (20), and a control and regulating device (50) which is designed for carrying out a method according to one of the preceding claims, and which is optionally set up for receiving at least one heat storage capacity input signal and at least one power input signal, preferably a power generation input signal of a photovoltaic installation or a wind turbine, wherein the control and / or regulating device (50) is further based on the at least one heat storage capacity input signal and the at least one power input signal set up for outputting a first control signal for the first heat source for heating domestic water, a second control signal for the second heat source for heating domestic water and a third control signal for a pump (27) of the domestic water circuit (20),
**characterized in that** the first heat source is arranged in the hot water tank (10) or at another place within the domestic water circuit (20).

15. Heating and domestic water system (100) according to claim 14, comprising a pump (27) in the domestic water circuit (20) and a heat exchanger (30) for the thermal coupling of the domestic water circuit (20) and the heating water circuit (40), wherein preferably the heat exchanger (30) is further designed for thermal coupling of the domestic water circuit (20) and / or the heating water circuit (40) with the first heat source.

## Revendications

1. Procédé d'utilisation d'une installation d'eau de chauffage et sanitaire (100), qui comprend un dispositif de génération de courant, un accumulateur d'eau chaude (10) pour l'eau sanitaire, un circuit d'eau sanitaire (20), un circuit d'eau de chauffage (40), une première source de chaleur pour chauffer l'eau sanitaire, et une seconde source de chaleur pour chauffer l'eau sanitaire, la seconde source de chaleur étant disposée dans l'accumulateur d'eau chaude (10) ou à un autre endroit dans le circuit d'eau sanitaire (20),
le circuit d'eau sanitaire (20) et le circuit d'eau de chauffage (40) étant couplés thermiquement, comprenant les étapes suivantes :
a) vérification si une capacité d'accumulation de chaleur de l'accumulateur d'eau chaude (10) existe ;
b) vérification si du courant généré par le dispositif de génération de courant est disponible, le dispositif de génération de courant étant couplé à la première source de chaleur et/ou à la seconde source de chaleur et / ou étant connecté à la première source de chaleur et/ou à la seconde source de chaleur par un réseau électrique intelligent ;
c) si une capacité d'accumulation de chaleur existe et si du courant généré par le dispositif de génération de courant est disponible, alimentation de la première source de chaleur et/ou de la seconde source de chaleur avec le courant du dispositif de génération de courant et chauffage de l'eau sanitaire, en particulier dans l'accumulateur d'eau chaude (10), au moyen de la première source de chaleur et/ou de la seconde source de chaleur alimentée avec le courant du dispositif de génération de courant ;
d) transfert d'énergie thermique de l'eau sanitaire du circuit d'eau sanitaire (20) à l'eau de chauffage dans le circuit d'eau de chauffage (40) si un besoin en chauffage existe,
**caractérisé en ce que** la première source de chaleur est disposée dans l'accumulateur d'eau chaude (10) ou à un autre endroit dans le circuit d'eau sanitaire (20).

2. Procédé selon la revendication 1,
**caractérisé en ce que**
le couplage thermique du circuit d'eau sanitaire (20) et du circuit d'eau de chauffage (40) n'a pas lieu au niveau du circuit de retour de chauffage du circuit d'eau de chauffage (40).

3. Procédé selon la revendication 1 ou 2,
**caractérisé en ce que**
la température de l'eau sanitaire dans l'accumulateur d'eau chaude (10) est mesurée de préférence à des distances prédéfinies, en particulier continues, en particulier continuellement, la température mesurée de l'eau sanitaire étant de préférence comparée à une première température prédéfinie, sachant que, en cas de dépassement de la première température prédéfinie, le transfert d'énergie thermique commence selon l'étape d), la première température prédéfinie s'élevant en particulier à au moins 85 °C, de préférence au moins 75 °C, plus préférentiellement au moins 65 °C, très préférentiellement au moins 60 °C, tout à fait préférentiellement au moins 50 °C.

4. Procédé selon une des revendications précédentes,
**caractérisé en ce que**
le procédé comprend en outre une ou plusieurs des étapes suivantes :
e) cessation du chauffage de l'eau sanitaire si aucune capacité d'accumulation de chaleur de l'accumulateur d'eau chaude n'existe et / ou si aucun courant ou aucun courant suffisant du dispositif de génération de courant n'est à disposition pour alimenter la première et/ou seconde source de chaleur,
f) cessation du transfert d'énergie thermique de l'eau sanitaire à l'eau de chauffage si la température de l'eau sanitaire, en particulier mesurée dans l'accumulateur d'eau chaude (10), n'atteint pas une deuxième température prédéfinie et/ou une température de départ de chauffage du circuit d'eau de chauffage (40), la deuxième température s'élevant de préférence au maximum à 70 °C, plus préférentiellement au maximum à 65 °C, très préférentiellement au maximum à 60 °C, tout à fait préférentiellement au maximum à 50 °C,
g) mise en circuit d'une autre source de chaleur pour chauffer l'eau de chauffage si l'énergie thermique selon l'étape d) est transférée et si une température de départ de chauffage du circuit d'eau de chauffage (40) se situe en dessous d'une troisième température prédéfinie.

5. Procédé selon une des revendications précédentes,
**caractérisé en ce que**
l'installation d'eau de chauffage et sanitaire (100) comprend, pour le couplage thermique du circuit d'eau sanitaire (20) et du circuit d'eau de chauffage (40), un échangeur de chaleur (30), le transfert d'énergie thermique ayant lieu dans l'étape d) par l'intermédiaire de l'échangeur de chaleur (30), le couplage thermique entre le circuit d'eau sanitaire (20) et le circuit d'eau de chauffage (40) ayant lieu de préférence exclusivement dans l'échangeur de chaleur (30).

6. Procédé selon la revendication 5,
**caractérisé en ce**
**qu'**il est prévu dans le circuit d'eau sanitaire (20) une pompe (27), en particulier une pompe de chargement d'accumulateur, l'eau sanitaire chauffée de l'accumulateur d'eau chaude (10) étant transportée au moyen de la pompe (27) pour le transfert d'énergie thermique de l'eau sanitaire à l'eau de chauffage vers l'échangeur de chaleur (30) est en retour depuis celui-ci vers l'accumulateur d'eau chaude (10), la pompe (27) étant de préférence disposée dans une ligne d'eau froide du circuit d'eau sanitaire (20).

7. Procédé selon une des revendications précédentes,
**caractérisé en ce que**
la première source de chaleur comprend un brûleur (31), en particulier un brûleur à gaz, et la seconde source de chaleur un élément chauffant électrique, en particulier un barreau chauffant électrique (13).

8. Procédé selon la revendication 7,
**caractérisé en ce que**
la première source de chaleur est conçue pour chauffer l'eau sanitaire et pour chauffer l'eau de chauffage, la première source de chaleur et le circuit d'eau de chauffage (40) étant de préférence couplés thermiquement au moyen d'un échangeur de chaleur (30) la première source de chaleur et le circuit d'eau sanitaire (20) étant en outre très préférentiellement couplés thermiquement au moyen de l'échangeur de chaleur (30), et le circuit d'eau sanitaire (20) et le circuit d'eau de chauffage (40) étant de plus tout à fait préférentiellement couplés thermiquement au moyen de l'échangeur de chaleur (30).

9. Procédé selon la revendication 8,
**caractérisé en ce que**,
facultativement ou impérativement, la première source de chaleur est coupée ou la puissance de la première source de chaleur est réduite si, selon l'étape d), de l'énergie thermique est transférée de l'eau sanitaire à l'eau de chauffage.

10. Procédé selon une des revendications 7 à 9 en référence à la revendication 6,
**caractérisé en ce que**
l'accumulateur d'eau chaude (10) présente un raccordement d'eau froide (12) et un raccordement d'eau chaude (11), la pompe (27) transportant l'eau sanitaire chauffée par l'intermédiaire du raccordement d'eau froide (12) vers l'échangeur de chaleur (30) et depuis l'échangeur de chaleur (30) par l'intermédiaire du raccordement d'eau chaude (11) en retour vers l'accumulateur d'eau chaude (10).

11. Procédé selon une des revendications 1 à 6,
**caractérisé en ce que**
la première source de chaleur comprend une pompe à chaleur (15) et la seconde source de chaleur un élément chauffant électrique, en particulier un barreau chauffant électrique (13), les première et seconde sources de chaleur étant de préférence couplées au dispositif de génération de courant.

12. Procédé selon la revendication 11,
**caractérisé en ce que**,
pendant l'étape c), alternativement seulement la première source de chaleur, seulement la seconde source de chaleur, ou les première et seconde sources de chaleur chauffent l'eau sanitaire.

13. Procédé selon la revendication 11 ou 12 en référence à la revendication 6,
**caractérisé en ce que**
l'accumulateur d'eau chaude (10) présente un raccordement d'eau froide (12) et un raccordement d'eau chaude (11), la pompe (27) transportant l'eau sanitaire chauffée par l'intermédiaire du raccordement d'eau chaude (11) vers l'échangeur de chaleur (30) et depuis l'échangeur de chaleur (30) par l'intermédiaire du raccordement d'eau froide (12) en retour vers l'accumulateur d'eau chaude (10).

14. Installation d'eau de chauffage et sanitaire (100), comprenant un dispositif de génération de courant, un accumulateur d'eau chaude (10) pour l'eau sanitaire, un circuit d'eau sanitaire (20), un circuit d'eau de chauffage (40), une première source de chaleur pour chauffer l'eau sanitaire, une seconde source de chaleur pour chauffer l'eau sanitaire, la seconde source de chaleur étant disposée dans l'accumulateur d'eau chaude (10) ou à un autre endroit dans le circuit d'eau sanitaire (20), et un dispositif de commande et de réglage (50), qui est conçue pour réaliser un procédé selon une des revendications précédentes et qui est aménagée le cas échéant pour recevoir au moins un signal d'entrée de capacité d'accumulation de chaleur et au moins un signal d'entrée de courant, de préférence un signal d'entrée de génération de courant d'une installation photovoltaïque ou d'une centrale éolienne, le dispositif de commande et/ou de réglage (50), en se basant en outre sur l'au moins un signal d'entrée de capacité d'accumulation de chaleur et l'au moins un signal d'entrée de courant, étant aménagé pour émettre un premier signal de commande pour la première source de chaleur pour chauffer de l'eau sanitaire, un deuxième signal de courant pour la seconde source de chaleur pour chauffer de l'eau sanitaire et un troisième signal de commande pour une pompe (27) du circuit d'eau sanitaire (20),
**caractérisée en ce que** la première source de chaleur est disposée dans l'accumulateur d'eau chaude (10) ou à un autre endroit dans le circuit d'eau sanitaire (20).

15. Installation d'eau chaude et sanitaire (100) selon la revendication 14, comprenant une pompe (27) dans le circuit d'eau sanitaire (20) et un échangeur de chaleur (30) pour le couplage thermique du circuit d'eau sanitaire (20) et du circuit d'eau de chauffage (40), l'échangeur de chaleur (30) étant de préférence en outre conçu pour le couplage thermique du circuit d'eau sanitaire (20) et/ou du circuit d'eau de chauffage (40) avec la première source de chaleur.
